(19) Europäisches Patentamt European Patent Office Office européen des brevets

(11) **EP 4 474 882 A1**

(12) **EUROPEAN PATENT APPLICATION**
published in accordance with Art. 153(4) EPC

(43) Date of publication:
**11.12.2024 Bulletin 2024/50**

(51) International Patent Classification (IPC):
***G02B 13/00*** (2006.01)    ***G02B 13/18*** (2006.01)
***G02B 13/24*** (2006.01)

(21) Application number: **23773854.7**

(22) Date of filing: **21.03.2023**

(52) Cooperative Patent Classification (CPC):
**G02B 13/00; G02B 13/18; G02B 13/24**

(86) International application number:
**PCT/CN2023/082773**

(87) International publication number:
**WO 2023/179607 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 CN 202210288243**

(71) Applicant: **Huawei Technologies Co., Ltd.
Shenzhen, Guangdong 518129 (CN)**

(72) Inventors:
• **NIU, Yajun
Shenzhen, Guangdong 518129 (CN)**
• **TANG, Wei
Shenzhen, Guangdong 518129 (CN)**

• **LI, Dengfeng
Shenzhen, Guangdong 518129 (CN)**
• **BIAN, Xinxiu
Shenzhen, Guangdong 518129 (CN)**
• **WANG, Heng
Shenzhen, Guangdong 518129 (CN)**
• **YE, Haishui
Shenzhen, Guangdong 518129 (CN)**
• **LU, Jianlong
Shenzhen, Guangdong 518129 (CN)**
• **ZHANG, Le
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **OPTICAL LENS, CAMERA MODULE AND ELECTRONIC DEVICE**

(57)    This application discloses an optical lens, a camera module, and an electronic device. The optical lens includes a first lens group and a second lens group that are arranged from an object side to an image side, where the first lens group has positive focal power, the second lens group has negative focal power, and the first lens group and/or the second lens group are/is focusing lens groups/a focusing lens group. In a focusing process in which the optical lens switches from a long shot to a close-up shot, a spacing between the first lens group and the second lens group increases, and an effective focal length of the optical lens decreases. The optical lens satisfies a relational expression: F2/EFL > -5, where F2 is a focal length of the second lens group, and EFL is the effective focal length of the optical lens. The optical lens in this application is featured in telephoto, macro, and a large clear aperture, and can be miniaturized.

FIG. 4

EP 4 474 882 A1

## Description

This application claims priority to Chinese Patent Application No. 202210288243.4, filed with the China National Intellectual Property Administration on March 23, 2022, and entitled "OPTICAL LENS, CAMERA MODULE, AND ELECTRONIC DEVICE", which is incorporated herein by reference in its entirety.

## TECHNICAL FIELD

This application relates to the field of image shooting device technologies, and in particular, to an optical lens, a camera module, and an electronic device.

## BACKGROUND

Portable electronic products are increasingly widely used, and a camera module is a typical electronic device component. In a multi-camera combined optical lens, a design of a telephoto lens is indispensable. The telephoto lens has become a development trend of a camera module in an electronic product.

To improve photographing experience, usually, an optical lens expects to have a photosensitive element of a larger size, a smaller f-number (a larger clear aperture), and a shorter focusing distance for macro. However, in an earlier vertical design, as a focal length increases, a size of the optical lens increases sharply, but a size of a portable terminal device is limited, and it is difficult to implement macro image shooting.

Therefore, it is necessary to provide a miniaturized optical lens that supports telephoto, macro, and a large clear aperture.

## SUMMARY

This application provides an optical lens, a camera module, and an electronic device. The optical lens is featured in telephoto, macro, and a large clear aperture, and can be miniaturized.

According to a first aspect, this application provides an optical lens, including a first lens group and a second lens group that are arranged from an object side to an image side, where the first lens group has positive focal power, the second lens group has negative focal power, and the first lens group and/or the second lens group are/is focusing lens groups/a focusing lens group; and in a focusing process in which the optical lens switches from a long shot to a close-up shot, a spacing between the first lens group and the second lens group increases, an effective focal length of the optical lens decreases, and the optical lens satisfies the following relational expression: $F2/EFL > -5$, where $F2$ is a focal length of the second lens group, and $EFL$ is an effective focal length of the optical lens. During focusing, only the first lens group may move and focus along an optical axis, or only the second lens group may move and focus along an optical axis, or both the first lens group and the second lens group may move and focus along an optical axis. It should be noted that when an object distance is infinite, the optical lens in this application is a fixed-focus lens. When the object distance is switched from infinity to a macro distance, a focal length of the optical lens decreases.

In this application, the focal power of the first lens group and the focal power of the second lens group are limited, and it is limited that $F2/EFL > -5$, so that the optical lens is featured in telephoto, macro, and a large clear aperture, and can be miniaturized. Specifically, the first lens group has positive focal power, and the first lens group is configured to converge light beams, so that a diameter of a light beam entering the second lens group is small, and a caliber of the second lens group is no longer a maximum limitation on a clear aperture. This facilitates miniaturization and wide aperture design of the optical lens, effectively increases the clear aperture, and implements a small f-number. The second lens group has negative focal power. This facilitates a telephoto design and is used to implement focusing and macro focusing, has a small focusing stroke, and has a strong focusing capability. It is limited that $F2/EFL > -5$, so that it can be ensured that the second lens group has sufficiently large focal power, a focusing stroke can be reduced, a focusing capability is strong, and good image quality and high imaging definition are implemented when objects at different distances are shot. The optical lens in this application not only can perform long-shot image shooting, but also can perform close-up macro image shooting. The optical lens in this application has a good image shooting effect on a photographed object whose object distance is from infinite to 20 mm. When the optical lens in this application performs macro image shooting on an object whose object distance is between 20 mm and 50 mm, a focusing stroke is small, and imaging quality is high.

In a possible implementation, in the focusing process in which the optical lens switches from the long shot to the close-up shot, the first lens group moves toward the object side along an optical axis and/or the second lens group moves toward the image side along the optical axis. In a focusing process in which the optical lens switches from the long shot to the close-up shot, the second lens group may move toward the image side, or the first lens group may move toward the object side, or the first lens group may move toward the object side and the second lens group may move toward the image side, to increase a spacing between the first lens group and the second lens group, reduce an effective focal length of the optical lens, and implement macro image shooting.

In a possible implementation, the optical lens satisfies the following relational expression: $0.5 \leq$ TTL/EFL $\leq 5$, where TTL is a distance from an object-side surface of a first lens in the first lens group to an imaging plane on the optical axis when the optical lens is in a working state. The first lens is a lens closest to the object side in the first lens group. Limiting a range of TTL/EFL helps miniaturize the optical lens.

In a possible implementation, the optical lens satisfies the following relational expression: F1/EFL $\leq 5$, where F1 is a focal length of the first lens group. An appropriate range of the F1/EFL is limited, so that focal power of the first lens group can be properly configured, and an f-number is decreased. This is conducive to design of a wide aperture, improves a clear aperture, and ensures good imaging quality.

In a possible implementation, the first lens group includes at least two lenses, and the at least two lenses have different Abbe numbers. Chromatic aberration needs to be corrected by using lenses with different Abbe numbers. Therefore, the Abbe numbers of different lenses in the first lens group are set to be different, to reduce impact of the chromatic aberration on image quality.

In a possible implementation, the first lens group includes the first lens, a second lens, and a third lens that are arranged from the object side to the image side, the first lens has the positive focal power, the second lens has the negative focal power, and the third lens has the positive focal power. In this implementation, the focal power of the first lens, the focal power of the second lens, and the focal power of the third lens are properly configured. This is conducive to design of a wide aperture, improves a clear aperture, and ensures good imaging quality.

In a possible implementation, the first lens group includes a first lens, the optical lens satisfies the following relational expression: Vd1 $\geq 18$, where Vd1 is an Abbe number of the first lens. For example, the Abbe number of the first lens may be a value like 40 or 50. The Abbe number of the first lens is limited to be greater than 18, to ensure that the first lens group has a large Abbe number. In this case, the first lens group can ensure that the optical lens does not generate excessively large residual chromatic aberration, and design difficulty of a lens group on the image side of the first lens group is reduced.

In a possible implementation, at least one lens in the first lens group is made of glass. The lens made of the glass helps improve imaging quality, reduce chromatic aberration and a temperature drift effect of the optical lens, and avoid impact of a temperature change on a focal length of the optical lens. It may be understood that the lenses in the first lens group and the second lens group may be all glass or plastic lenses, or may include both a glass lens and a plastic lens. A lens made of glass helps improve imaging quality and reduce chromatic aberration and a temperature drift effect. A lens made of plastic can reduce a weight and costs of an optical lens.

In a possible implementation, the first lens group includes a first lens, and a near-optical-axis region of an object-side surface of the first lens has a convex surface, which facilitates light beam convergence. The near-optical-axis region of the object-side surface of the first lens is a region of 1/50 of a caliber height of the object-side surface of the first lens.

In a possible implementation, the optical lens satisfies the following relational expression: 1 mm $\leq \phi 1 \leq 30$ mm, where $\phi 1$ is a diameter of a maximum effective region of the first lens group. A larger diameter of the maximum effective region of the first lens group indicates a larger image height size of the optical lens, so that the optical lens has a feature of a large image height, and this helps increase imaging definition and improve imaging quality.

In a possible implementation, the optical lens satisfies the following relational expression: 1 mm $\leq \phi 2 \leq 30$ mm, where $\phi 2$ is a diameter of a maximum effective region of the second lens group. A larger diameter of the maximum effective region of the second lens group indicates a larger image height size of the optical lens, so that the optical lens has a feature of a large image height, and this helps increase imaging definition and improve imaging quality.

In a possible implementation, the optical lens satisfies the following relational expression: 0.3 mm $\leq$ h1 $\leq 50$ mm, where h1 is a maximum pop-up height of the first lens group, and the maximum pop-up height of the first lens group is a maximum moving distance of the first lens group when the optical lens is switched from a non-working state to a working state. In this implementation of this application, the maximum pop-up height of the first lens group is small, that is, a displacement of the first lens group is small. In this way, a requirement on power of a motor is small, and a volume of the motor used to drive the first lens group to move is reduced, so that the camera module is more easily miniaturized.

In a possible implementation, the optical lens satisfies the following relational expression: 0.3 mm $\leq$ h2 $\leq 50$ mm, where h2 is a maximum pop-up height of the second lens group, and the maximum pop-up height of the second lens group is a maximum moving distance of the second lens group when the optical lens is switched from a non-working state to a working state. In this implementation of this application, the maximum pop-up height of the second lens group is small, that is, a displacement of the second lens group is small. In this way, a requirement on power of a motor is small, and a volume of the motor used to drive the second lens group to move is reduced, so that the camera module is more easily miniaturized.

In a possible implementation, the optical lens includes a variable aperture, and a size of the variable aperture decreases in the focusing process in which the optical lens switches from the long shot to the close-up shot. During long-shot image shooting, the variable aperture can be adjusted to increase an aperture size. A depth of field is low, and a blurring effect is good, which is beneficial to long-shot image shooting. During macro image shooting, to improve image shooting definition, the blurring effect is not recommended. Therefore, the variable aperture needs to be adjusted to a smaller value to improve the image quality during macro image shooting.

In a possible implementation, the optical lens satisfies the following relationship: $0.5 \leq Fno \leq 8$, where Fno is an f-number of the optical lens. A small Fno indicates a wide aperture, and a large Fno indicates a small aperture. During long-shot image shooting, the variable aperture may be adjusted to reduce Fno to obtain a wide aperture, and a blurring effect is good, which is beneficial to long-shot image shooting. During macro image shooting, the Fno is increased and the aperture is decreased to improve the image quality during macro image shooting.

In a possible implementation, the optical lens includes a third lens group, the third lens group is located on an image side of the second lens group, and the third lens group has optical power. The third lens group may have positive focal power or negative focal power. In a focusing process, a position of the third lens group may remain unchanged, or the third lens group may move. The third lens group is configured to correct a curvature of field, to improve imaging quality of the optical lens. For example, the third lens group may have negative focal power. In this case, the third lens group functions as a flat-field lens, and can compensate for a partial curvature of field change caused by focusing, thereby greatly enhancing a focusing capability of the second lens group, so that a focusing capability of the optical lens is strong, and even image quality can be achieved when an object distance is from an infinite distance to a limited distance, and imaging quality of the camera module is higher. In another implementation, when the third lens group has positive focal power, a special structural requirement like different movement directions of the second lens group in an automatic focusing process is matched.

In a possible implementation, the optical lens satisfies the following relational expression: $5 \, mm \leq ox1 + ox2 + ox3 \leq 30 \, mm$, where ox1 is a thickness of the first lens group on the optical axis, ox2 is a thickness of the second lens group on the optical axis, and ox3 is a thickness of the third lens group on the optical axis. The optical lens in this application may be used for a pop-up camera module, or may be used for a periscope camera module. The pop-up camera module is used as an example. In an implementation of this application, it is limited that $ox1 + ox2 + ox3 \leq 30 \, mm$, so that it is ensured that the optical lens has a small size when being folded, and avoid a protrusion of a part of the optical lens to affect a weight and an appearance. It is limited that $ox1 + ox2 + ox3 \geq 5 \, mm$, so that the optical lens is featured in a large image height, and this helps increase imaging definition and improve imaging quality.

In a possible implementation, an optical surface of at least one lens in the third lens group is an aspheric surface. In this way, there is different focal power from a near-axis region to an out-field-of-view region, so that an image has a more balanced image quality, aberration is corrected, and imaging quality is improved.

In a possible implementation, the optical lens includes a liquid lens and/or a liquid crystal lens, and the liquid lens and/or the liquid crystal lens are/is located in the first lens group. In this implementation, a focus adjustment effect may be enhanced by using the liquid lens or the liquid crystal lens, to implement ultra-macro image shooting. The liquid lens is a mechanical part that uses liquid as a lens and changes a focal length by changing a curvature of the liquid. In another implementation, the liquid lens or the liquid crystal lens may alternatively be located in a second lens group G2.

In a possible implementation, the optical lens includes a diffraction element, and the diffraction element is located in the first lens group. In this implementation, the diffraction element is configured to reduce chromatic aberration and a volume of the optical lens, to improve imaging quality of the optical lens and implement miniaturization of the optical lens.

In a possible implementation, the optical lens satisfies the following relational expression: $2 \, mm \leq ImgH \leq 10 \, mm$, where ImgH is a maximum image height of the optical lens, and a diagonal size of a photosensitive element is twice the maximum image height of the optical lens. In this implementation of this application, a range of ImgH is limited, so that the optical lens is featured in a large target surface.

In a possible implementation, the optical lens satisfies the following relationship: $FOV \leq 140°$, where FOV is a full field of view of the optical lens.

In a possible implementation, an object distance range of the optical lens is from infinite to 20 mm, and the optical lens in this application can perform clear imaging within the object distance range of infinite to 20 mm.

In a possible implementation, a focusing stroke of the second lens group is less than or equal to 50 mm.

According to a second aspect, this application further provides a camera module, including a photosensitive element and the optical lens according to any foregoing implementation. The photosensitive element is located on an image side of the optical lens. The camera module is featured in telephoto, macro, and a large clear aperture, and can be miniaturized.

According to a third aspect, this application further provides an electronic device, including an image processor and the foregoing camera module. The image processor is communicatively connected to the camera module. The image processor is configured to obtain image data from the camera module and process the image data.

**BRIEF DESCRIPTION OF DRAWINGS**

FIG. 1 is a diagram of an electronic device according to an implementation of this application;

FIG. 2 is a diagram of a structure of a camera module according to Embodiment 1 of this application;

FIG. 3 is a diagram of a structure of the camera module shown in FIG. 2 in a working state;

FIG. 4 is a diagram of a structure of the camera module shown in FIG. 2 in another working state;

FIG. 5 is a diagram of a simplified structure of an optical lens in different states according to an implementation of this application;

FIG. 6 is a representation diagram of optical performance of an optical lens according to Embodiment 1 when an object distance is infinite;

FIG. 7 is a representation diagram of optical performance of an optical lens according to Embodiment 1 when an object distance is 50 mm;

FIG. 8 is a diagram of a structure of a camera module according to Embodiment 2 of this application;

FIG. 9 is a diagram of a structure of the camera module shown in FIG. 8 in a working state;

FIG. 10 is a diagram of a structure of the camera module shown in FIG. 8 in another working state;

FIG. 11 is a representation diagram of optical performance of an optical lens according to Embodiment 2 when an object distance is infinite;

FIG. 12 is a representation diagram of optical performance of an optical lens according to Embodiment 2 when an object distance is 50 mm;

FIG. 13 is a diagram of a structure of a camera module according to Embodiment 3 of this application;

FIG. 14 is a diagram of a structure of the camera module shown in FIG. 13 in a working state;

FIG. 15 is a diagram of a structure of the camera module shown in FIG. 13 in another working state;

FIG. 16 is a representation diagram of optical performance of an optical lens according to Embodiment 3 when an object distance is infinite;

FIG. 17 is a representation diagram of optical performance of an optical lens according to Embodiment 3 when an object distance is 50 mm;

FIG. 18 is a diagram of a structure of a camera module according to Embodiment 4 of this application;

FIG. 19 is a diagram of a structure of the camera module shown in FIG. 18 in a working state;

FIG. 20 is a diagram of a structure of the camera module shown in FIG. 18 in another working state;

FIG. 21 is a representation diagram of optical performance of an optical lens according to Embodiment 4 when an object distance is infinite; and

FIG. 22 is a representation diagram of optical performance of an optical lens according to Embodiment 4 when an object distance is 50 mm.

## DESCRIPTION OF EMBODIMENTS

For ease of understanding, English abbreviations and related technical terms used in embodiments of this application are first explained and described below.

Focal power (focal power) is equal to a difference between convergence of an image beam and convergence of an object beam, and represents a capability of an optical system to refract light rays.

For a lens or a lens group with positive focal power, the lens or lens group has a positive focal length, and has an effect of converging light rays.

For a lens or a lens group with negative focal power, the lens or lens group has a negative focal length, and has an effect of diverging light rays.

A focal length (focal length) is a measurement of convergence or divergence of light in an optical system, and refers to a vertical distance from an optical center of a lens or a lens group to a focal plane when a clear image of an infinite scene is formed on the focal plane by using the lens or the lens group. For a thin lens, a focal length is a distance from a lens center to an imaging plane. For a thick lens piece or a lens group, a focal length is equal to an effective focal length (effective focal length, EFL), that is, a distance from a rear main surface of the lens or the lens group to an imaging plane.

Object side: With a lens as a boundary, a side on which a to-be-imaged object is located is the object side.

Image side: With the lens as the boundary, a side on which an image of the to-be-imaged object is located is the image side.

Object-side surface: With the lens as the boundary, a side on which a shot object is located is an object side, and a surface of the lens close to the object side is referred to as the object-side surface.

Image-side surface: With the lens as the boundary, a side on which an image of the shot object is located is an image side, and a surface of the lens close to the image side is referred to as the image-side surface.

An imaging plane is a carrier plane that is located on image sides of all lenses in an optical lens and on which an image is formed after light rays sequentially pass through the lenses in the optical lens.

An aperture is an apparatus configured to control an amount of light rays passing through a lens and entering a photosensitive surface in a body of a camera, and is usually inside the lens.

An f-number, also referred to as an F number (Fno), is a relative value (a reciprocal of a relative aperture) obtained by dividing a focal length of a lens by an entrance pupil diameter of the lens. A smaller f-number indicates a larger amount of admitted light in a same unit time. A larger f-number indicates a smaller depth of field. In this case, shot background content is blurred, which is similar to an effect of a telephoto lens.

An Abbe number, namely, a dispersion coefficient, is a difference ratio of refractive indices of an optical material at different wavelengths, and represents a degree of dispersion of the material.

Field of view (field of view, FOV): In an optical instrument, using a lens of the optical instrument as a vertex, an included angle formed by two edges of a maximum range within which a target object can be observed through the lens is referred to as the field of view. A size of the field of view determines a range of vision of the optical instrument. A field of view larger indicates a broader vision and a smaller optical magnification.

Aberration: A paraxial region of an optical system has properties of an ideal optical system. A paraxial light ray emitted from a point on an object intersects an image plane at one point (namely, a paraxial image point). However, light rays actually passing through different apertures of a lens can hardly perfectly intersect at one point. Instead, there are deviations from a position of the paraxial image point. These deviations are collectively referred to as an aberration.

An optical axis is a light ray that vertically passes through an ideal lens center. When light rays parallel to the optical axis enter a convex lens piece, in an ideal convex lens, all the light rays converge at one point behind the lens piece. This point at which all the light rays converge is a focus. When the light rays travel along the optical axis, a transmission direction does not change.

Axial chromatic aberration (longitudinal spherical aber) is also referred to as longitudinal chromatic aberration or positional chromatic aberration or axial chromatic aberration. A beam of light rays parallel to an optical axis converges at different positions after passing through a lens. This aberration is referred to as positional chromatic aberration or axial chromatic aberration. This is because positions of images formed by the lens for light of different wavelengths are different, so that image focal planes of light of different colors cannot overlap during final imaging, and polychromatic light is scattered to form dispersion.

A distortion (distortion) is a degree at which an image formed by an optical system for an object is distorted relative to the object. A distortion is caused because a height of a point at which chief light rays with different fields of view intersect a Gaussian image plane after the chief light rays pass through the optical system is not equal to an ideal image height due to impact of a diaphragm spherical aberration, and a difference between the two heights is a distortion. Therefore, a distortion only changes an imaging position of an off-axis object point on an ideal plane, so that a shape of an image is distorted, but definition of the image is not affected.

Astigmatism (astigmatism): Because an object point is not on an optical axis of an optical system, a beam emitted by the object point has an oblique angle to the optical axis. After the beam is refracted by a lens, convergence points of a meridian pencil and a sagittal pencil are not a same point. That is, the beam cannot be focused at one point, and imaging is not clear, resulting in astigmatism. The meridian pencil and the sagittal pencil are names of beams in two vertical planes in a rotationally symmetrical optical system.

A curvature of field (curvature of field) indicates a difference in an optical axis direction between a position of the clearest image point in a non-central field of view array passing through an optical lens group and a position of the clearest image point in a central field of view. When a lens has a curvature of field, an intersection of an entire beam does not coincide with an ideal image point. Although a clear image point can be obtained at each specific point, an entire image plane is a curved surface.

The following describes technical solutions of embodiments of this application with reference to the accompanying drawings. In the description of embodiments of this application, the terms "first" and "second" and the like are merely intended for description, and shall not be understood as an indication or implication of relative importance or implicit indication of a quantity of indicated technical features. Therefore, a feature limited by "first" or "second" may explicitly or implicitly include one or more features.

This application provides an optical lens, a camera module to which the optical lens is applied, and an electronic device including the camera module. The optical lens includes a first lens group and a second lens group that are arranged from an object side to an image side, where the first lens group has positive focal power, the second lens group has negative focal power, and the first lens group and/or the second lens group are/is focusing lens groups/a focusing lens group. In a focusing process in which the optical lens switches from a long shot to a close-up shot, a spacing between the first lens group and the second lens group increases, and an effective focal length of the optical lens decreases. The optical lens satisfies the following relational expression: $F2/EFL > -5$, where $F2$ is a focal length of the second lens group, and $EFL$ is the effective focal length of the optical lens. In this application, the focal power of the first lens group and the focal power of the second lens group are limited, and it is limited that $F2/EFL > -5$, so that the optical lens is featured in telephoto, macro, and a large clear aperture, and can be miniaturized. Specifically, the first lens group has positive focal power, and the first lens group is configured to converge light beams, so that a diameter of a light beam entering the second lens group is small, and a caliber of the second lens group is no longer a maximum limitation on a clear aperture. This facilitates miniaturization and wide aperture design of the optical lens, effectively increases the clear aperture, and implements a small f-number. The second lens group has negative focal power, and this facilitates a telephoto design and is used to implement focusing and macro focusing. It is limited that F2/EFL > -5, so that it can be ensured that the second lens group has sufficiently large focal power, a focusing stroke can be reduced, a focusing capability is strong, and good image quality and high imaging definition are implemented when objects at different distances are shot. The optical lens in this application not only can perform long-shot image shooting, but also can perform close-up macro image shooting. The optical lens in this application has a good image shooting effect on a photographed object whose object distance is from infinite to 20 mm.

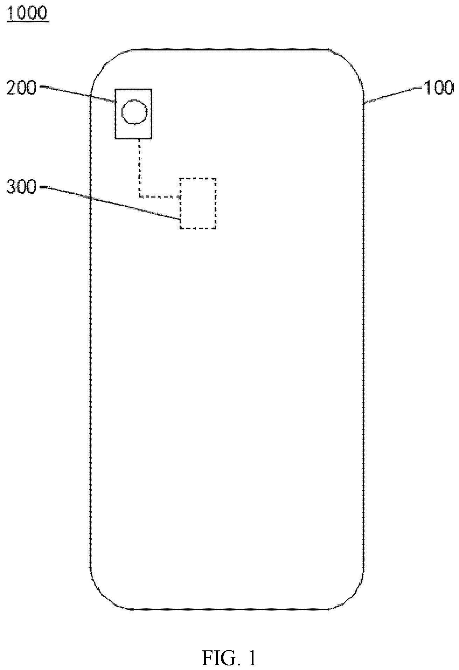

This application provides an electronic device. The electronic device may be a device that has a photographing or video shooting function, like a mobile phone, a tablet computer, a laptop computer, or a wearable device. FIG. 1 is a diagram of an electronic device 1000 according to an embodiment of this application. In this embodiment, the electronic device 1000 is a mobile phone. In this application, an example in which the electronic device 1000 is a mobile phone is used for description.

The electronic device 1000 includes a housing 100, a camera module 200, and an image processor 300. The camera module 200 and the image processor 300 are located in the housing 100, and the camera module 200 is communicatively connected to the image processor 300. The camera module 200 is configured to obtain image data and input the image data to the image processor 300. The image processor 300 is configured to process the image data obtained from the camera module 200. A communication connection between the camera module 200 and the image processor 300 may be implemented in an electrical connection manner like cabling, a coupling manner, or the like, for data transmission. It can be understood that the communication connection between the camera module 200 and the image processor 300 may alternatively be implemented in another manner that can implement data transmission.

A function of the image processor 300 is to perform optimization processing on a digital image signal through a series of complex mathematical algorithm operations and finally transmit a processed signal to a display for displaying. The image processor 300 may be an image processing chip, a digital signal processing (DSP) chip, or the like, and can process an image signal and a digital signal. A function of the image processor 300 is to quickly transfer, in time, data obtained by a photosensitive chip of the camera module 200 to a central processing unit and refresh the photosensitive chip. Therefore, quality and stability of the DSP chip directly affect image quality (such as color saturation and definition).

In a specific implementation, the camera module 200 may be disposed on the back of the electronic device 1000, and the camera module 200 is used as a rear-facing camera of the electronic device 1000. In another implementation, the camera module 200 may alternatively be disposed on a front side of the electronic device 1000, and is used as a front-facing lens of the electronic device 1000. Both the front-facing lens and the rear-facing lens may be used to take a selfie, and may also be used by a photographer to photograph other objects.

It may be understood that a mounting position of the camera module 200 of the electronic device 1000 in the embodiment shown in FIG. 1 is merely an example. The mounting position of the camera module 200 is not strictly limited in this application. In some other embodiments, the camera module 200 may alternatively be mounted in another position of the electronic device 1000. For example, the camera module 200 may be mounted in a position like an upper middle or an upper right corner of the electronic device 1000. Alternatively, the camera module 200 may not be disposed on a main body of the mobile phone, but may be disposed on an auxiliary component that can move or rotate relative to the mobile phone. For example, the auxiliary component may extend, retract, or rotate from the main body of the mobile phone.

In some embodiments, the electronic device 1000 may alternatively include an analog-to-digital converter (also referred to as an A/D converter, which is not shown in FIG. 1). The analog-to-digital converter is connected between the camera module 200 and the image processor 300. The analog-to-digital converter is configured to convert a signal generated by the camera module 200 into a digital image signal, and transmit the digital image signal to the image processor 300, then the image processor 300 processes the digital image signal, and finally the display displays an image or a video.

In some embodiments, the electronic device 1000 may alternatively include a memory (not shown in FIG. 1). The memory is communicatively connected to the image processor 300. After processing a digital image signal, the image processor 300 transmits an image to the memory, so that when an image needs to be viewed subsequently, the image can be found from the memory at any time and displayed on the display. In some embodiments, the image processor 300 further compresses a processed digital image signal, and then stores the compressed digital image signal in the memory to save memory space.

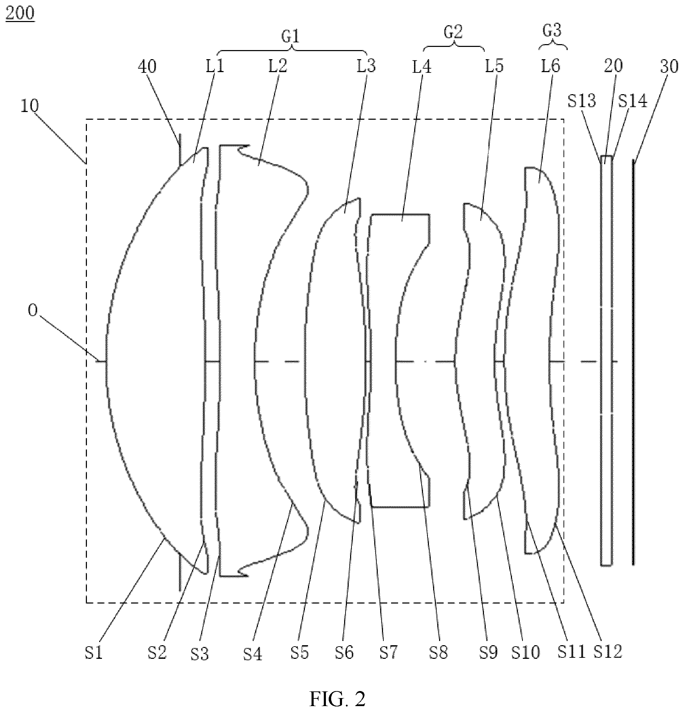

FIG. 2 is a diagram of a structure of a camera module 200 according to Embodiment 1 of this application. The camera module 200 includes an optical lens 10, a light filter 20, and a photosensitive element 30. The photosensitive element 30 is located on an image side of the optical lens 10. When the camera module 200 works, a to-be-imaged object is imaged on the photosensitive element 30 after passing through the optical lens 10 and being filtered by light of the light filter 20. The optical lens 10 affects imaging quality and an imaging effect. A clear image is formed on an imaging plane after a scene light passes through the optical lens 10, and the image of the scene is recorded by using the photosensitive element 30. It may be understood that an imaging element in the optical lens 10 may be the photosensitive element 30, or may be another imaging element. This is not limited in this application. Specifically, a working principle of the camera module 200 is as follows: A light reflected by a photographed object generates an optical image by using the optical lens 10 and the optical image is projected to a surface of the photosensitive element 30, and the photosensitive element 30 converts the optical image into an electrical signal, namely, an analog image signal, and transmits the analog image signal obtained through conversion to the image processor 300.

The photosensitive element 30 is a semiconductor chip, and its surface includes hundreds of thousands to millions of photodiodes. When being irradiated by light, the photosensitive element 30 generates charges. The photosensitive element 30 may be a charge coupled device (charge coupled device, CCD), or may be a complementary metal-oxide semiconductor (complementary metal-oxide semiconductor, CMOS) device. The charge coupled device is made of a highly photosensitive semiconductor material, and can convert light rays into electric charges. The charge coupled device is constituted by many photosensitive units, usually in megapixels. When the surface of the charge coupled device is illuminated by light rays, each photosensitive unit reflects electric charges on a component. Signals generated by all photosensitive units are combined to form a complete picture. The complementary metal-oxide semiconductor device is a semiconductor mainly made by using two elements: silicon and germanium, so that semiconductors of N (with negative electrons) and P (with positive electrons) levels coexist on the complementary metal-oxide semiconductor device. A current generated by these two complementary effects can be recorded and interpreted into an image by an image processing sensor.

The light filter 20 is configured to filter out an undesired band in the light rays keeping the photosensitive element 30 from generating false colors or ripples, to improve effective resolution and color reproduction of the photosensitive element 30. For example, the light filter 20 may be an infrared light filter. In this embodiment, the light filter 20 is an independent component. In some other embodiments, a light filter mechanical part may be removed, and instead, surface processing or material processing is performed on at least one optical element of the optical lens 10, to implement light filtering. A specific embodiment of a mechanical part or structure used for implementing light filtering is not strictly limited in this application.

The optical lens 10 in this application may be a pop-up lens or a periscope lens. An example in which the optical lens 10 is a pop-up lens is used for description in this application. When the optical lens 10 is a telescopic lens, the optical lens 10 occupies a small plate area, and releases more space inside the electronic device 1000, to accommodate components such as a battery.

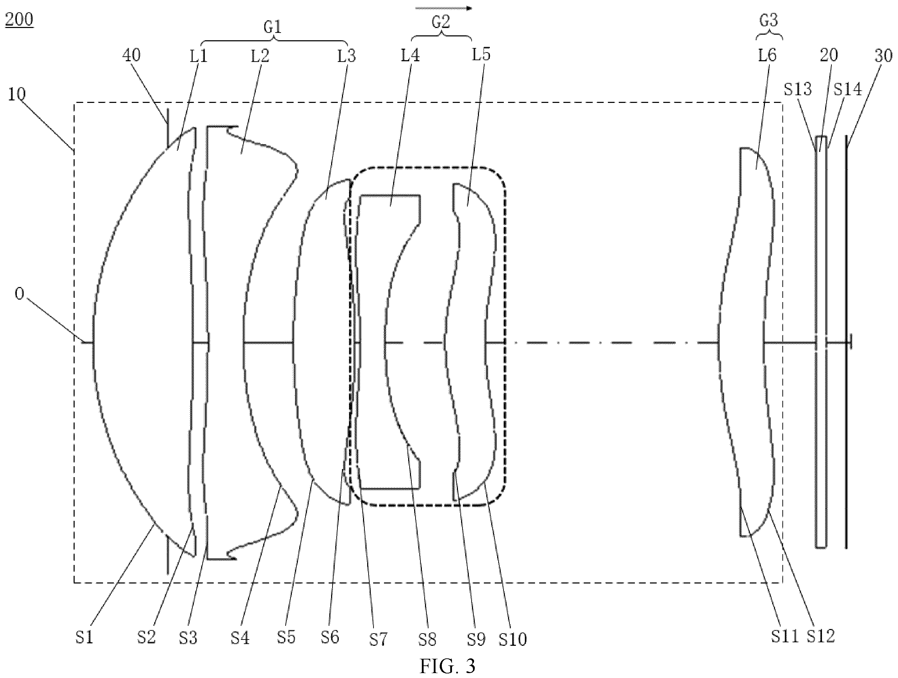

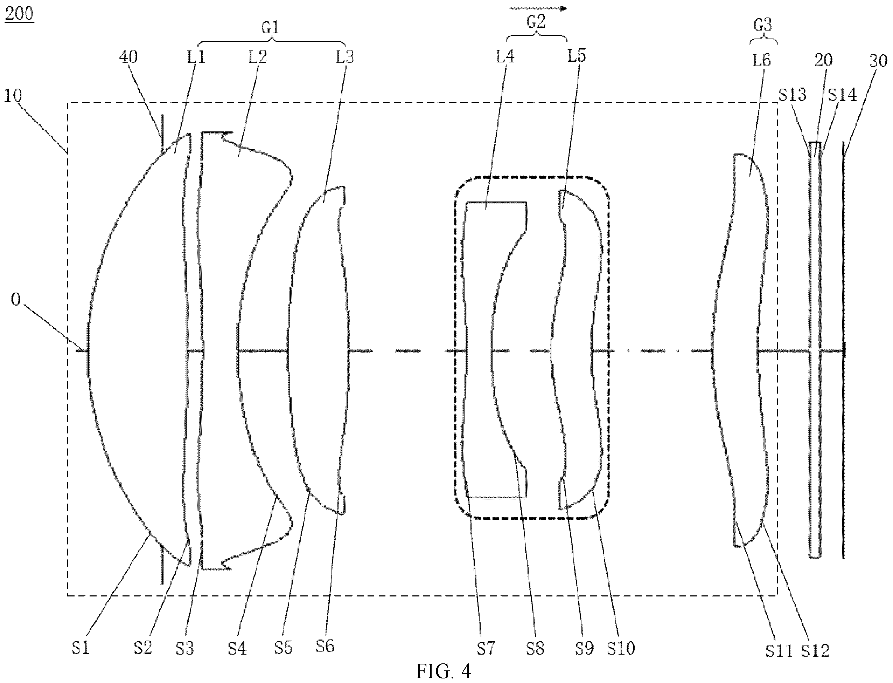

Refer to FIG. 2, FIG. 3, and FIG. 4. The camera module 200 shown in FIG. 2 is in a non-working state. FIG. 3 is a diagram of a structure of the camera module 200 shown in FIG. 2 in a working state. FIG. 4 is a diagram of a structure of the camera module 200 shown in FIG. 2 in another working state. FIG. 3 is a long-shot working state of the camera module 200 shown in FIG. 2 when an object distance is infinite. FIG. 4 is a close-up working state of the camera module 200 shown in FIG. 2 during macro image shooting.

In this application, an optical lens 10 includes a first lens group G1 and a second lens group G2 that are sequentially arranged from an object side to an image side. The first lens group G1 has positive focal power, the second lens group G2 has negative focal power, the first lens group G1 includes at least one lens having focal power, and the second lens group G2 includes at least one lens having focal power.

The first lens group G1 and/or the second lens group G2 are/is focusing lens groups/a focusing lens group. For example, in a focusing process, only the first lens group G1 may move and focus along an optical axis O, or only the second lens group G2 may move and focus along an optical axis O, or both the first lens group G1 and the second lens group G2 may move and focus along an optical axis O. In a focusing process in which the optical lens 10 switches from a long shot to a close-up shot, a spacing between the first lens group G1 and the second lens group G2 increases, and an effective focal length of the optical lens 10 decreases. In other words, a focal length of the optical lens 10 when the object distance is a macro distance is less than a focal length when the object distance is infinite. In the focusing process in which the optical lens 10 switches from the long shot to the close-up shot, the second lens group G2 may move toward the image side along the optical axis O, or the first lens group G1 moves toward the object side along the optical axis O, or the first lens group G1 moves toward the object side along the optical axis O and the second lens group G2 may move toward the image side along the optical axis O, to increase the spacing between the first lens group G1 and the second lens group G2, to implement a macro focusing effect.

The optical lens 10 satisfies the following relational expression: F2/EFL > -5, where F2 is a focal length of the second lens group G2, and EFL is an effective focal length of the optical lens 10. For example, a value of F2/EFL may be -1, -1.5, -2, -3, -4, or the like.

It should be noted that when the object distance is infinite, the optical lens 10 in this application is a fixed-focus lens. When the object distance is switched from infinity to a macro distance, a focal length of the optical lens 10 decreases.

In this application, the focal power of the first lens group G1 and the focal power of the second lens group G2 are limited, and it is limited that F2/EFL > -5, so that the optical lens 10 is featured in telephoto, macro, and a large clear aperture, and can be miniaturized. The first lens group G1 has positive focal power, and the first lens group G1 is configured to converge light beams, so that a diameter of a light beam entering the second lens group G2 is small, and a caliber of the second lens group G2 is no longer a maximum limitation on a clear aperture. This facilitates miniaturization and wide aperture design of the optical lens 10, effectively increases the clear aperture, and implements a small f-number. The second lens group G2 has negative focal power, and this facilitates a telephoto design and is used to implement focusing and macro focusing, has a small focusing stroke, and has a strong focusing capability. It is limited that F2/EFL > -5, so that it can be ensured that the second lens group G2 has sufficiently large focal power, a focusing stroke can be reduced, a strong focusing capability is strong, and good image quality and high imaging definition are implemented when objects at different distances are shot. The optical lens 10 having a telephoto feature is featured in a small depth of field, and the optical lens 10 having a feature of a wide aperture is also featured in a small depth of field, which helps implement an image shooting effect of background blurring when the object distance is large. The optical lens 10 in this application not only can perform long-shot image shooting, but also can perform close-up macro image shooting. The optical lens 10 in this application has a good image shooting effect on a photographed object whose object distance is from infinite to 20 mm. When the optical lens 10 in this application performs macro image shooting on an object whose object distance is between 20 mm and 50 mm, a focusing stroke is small, and imaging quality is high.

According to the theory of applied optics, when two lens groups whose focal lengths are respectively Fa and Fb are arranged at an interval of d, a focal length F of a combined system of the two lens groups satisfies $1/F = 1/Fa + 1/Fb - d/(Fa \times Fb)$. In this embodiment, because a focal length of the first lens group G1 is positive, and the focal length of the second lens group G2 is negative, when the second lens group G2 moves toward the image side, or when the first lens group G1 moves toward the object side, the interval d between the first lens group G1 and the second lens group G2 increases. Therefore, a combined focal length of the first lens group G1 and the second lens group G2 decreases. Therefore, in this embodiment, when the second lens group G2 moves toward the image side, or when the first lens group G1 moves toward the object side, the combined focal length of the first lens group G1 and the second lens group G2 tends to decrease, and this helps implement macro image shooting.

In an implementation of this application, properly configuring a value of F2 helps compensate, by using a small displacement, for an image plane drift caused by an object plane change during macro focusing, and suppresses aberration deterioration caused by focusing in another manner.

In some embodiments, the optical lens 10 includes a third lens group G3, the third lens group G3 is located on an image side of the second lens group G2, the third lens group G3 may have positive focal power or negative focal power, and the third lens group G3 includes at least one lens having focal power. In a focusing process, a position of the third lens group G3 may remain unchanged, or the third lens group G3 may move along the optical axis O. The third lens group G3 is configured to correct a curvature of field, to improve imaging quality of the optical lens 10. For example, the third lens group G3 may have negative focal power. In this case, the third lens group G3 functions as a flat-field lens, and can compensate for a partial curvature of field change caused by focusing, and this greatly enhances a focusing capability of the second lens group G2, so that a focusing capability of the optical lens 10 is strong, and even image quality can be achieved when the object distance is from an infinite distance to a limited distance, and imaging quality of the camera module 200 is higher. In another implementation, when the third lens group G3 has positive focal power, a special structural requirement like different movement directions of the second lens group G2 in an automatic focusing process is matched.

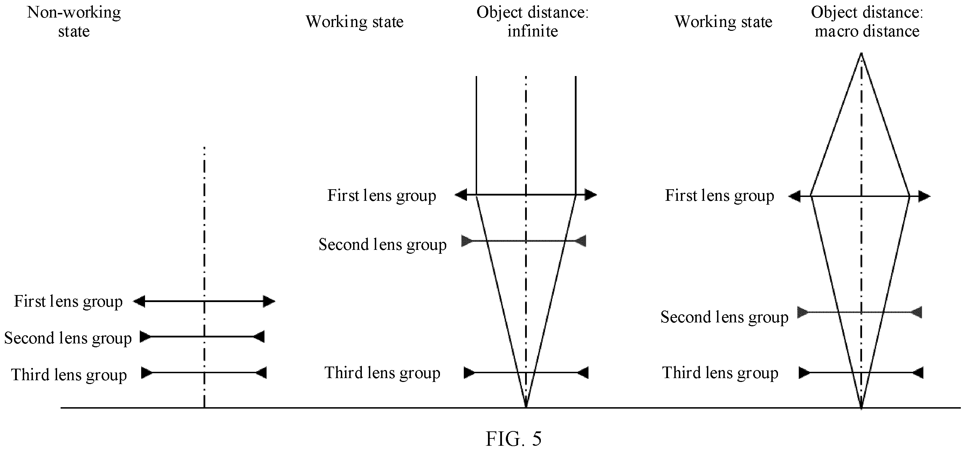

With reference to FIG. 2, FIG. 3, FIG. 4, and FIG. 5, FIG. 5 is a diagram of a simplified structure of an optical lens in different states. When a camera module 200 is switched from a non-working state (a folded state) to a working state (a long-shot state or a close-up state), a first lens group G1 and a second lens group G2 move toward an object side along an optical axis O, and a third lens group G3 does not move. When the camera module 200 is switched from the working state to the non-working state, the first lens group G1 and the second lens group G2 move toward an image side along the optical axis O, and the third lens group G3 does not move. In another implementation, the third lens group G3 may alternatively move toward the object side or the image side.

When the camera module 200 is switched from the long-shot state to the close-up state, the second lens group G2 moves toward the image side along the optical axis O, and the first lens group G1 and the third lens group G3 do not move, to implement focusing. In another implementation, when the camera module 200 is switched from the long-shot state to the close-up state, the first lens group G1 may alternatively move toward the object side along the optical axis O, and the third lens group G3 may alternatively move toward the object side or the image side along the optical axis O.

When the camera module 200 is switched from the close-up state to the long-shot state, the second lens group G2 moves toward the object side along the optical axis O, and the first lens group G1 and the third lens group G3 do not move, to implement focusing. In another implementation, when the camera module 200 is switched from the long-shot state to the close-up state, and the first lens group G1 moves toward the object side along the optical axis O, when the camera module 200 is switched from the close-up state to the long-shot state, the first lens group G1 may alternatively move toward the image side along the optical axis O. The third lens group G3 may move toward the object side or the image side along the optical axis O, or may not move.

In some embodiments, the first lens group G1 includes at least two lenses, and the at least two lenses in the first lens group G1 have different Abbe numbers. For example, the first lens group G1 includes a first lens, a second lens, and a third lens, and Abbe numbers of the first lens, the second lens, and the third lens are different. Chromatic aberration needs to be corrected by using a lens with different Abbe numbers. Therefore, the Abbe numbers of different lenses in the first lens group G1 are set to be different, to reduce impact of the chromatic aberration on image quality. In another implementation, the Abbe numbers of different lenses in the first lens group G1 may be the same, or a lens has a same Abbe number, and a lens has different Abbe numbers. This is not limited in this application.

In some embodiments, the optical lens 10 satisfies Vd1 ≥ 18, where Vd1 is an Abbe number of the first lens. For example, the Abbe number of the first lens L1 may be a value like 30, 40 or 50. The Abbe number of the first lens is limited to be greater than 18, to ensure that the first lens group G1 has a large Abbe number. In this case, the first lens group G1 can ensure that excessively large residual chromatic aberration is not generated, and reduce design difficulty of a lens group on the image side of the first lens group G1.

In some embodiments, the second lens group G2 includes at least two lenses, and the at least two lenses in the second lens group G2 have different Abbe numbers, to correct chromatic aberration and improve imaging quality. In another implementation, the Abbe numbers of different lenses in the second lens group G2 may be the same, or a lens has a same Abbe number, and a lens has different Abbe numbers. This is not limited in this application.

In some embodiments, at least one lens in the first lens group G1 is made of glass. The lens made of glass helps improve imaging quality, reduce chromatic aberration and a temperature drift effect of the optical lens 10, and avoid impact of a temperature change on a focal length of the optical lens 10. It may be understood that the lenses in the first lens group G1, the second lens group G2, and the third lens group G3 may be all made of glass or plastic, or may include both a glass lens and a plastic lens. A lens made of glass helps improve imaging quality and reduce chromatic aberration and a temperature drift effect. A lens made of plastic can reduce a weight and costs of the optical lens 10.

In some embodiments, the first lens group G1 includes a first lens L1, and a near-optical-axis region on an object-side surface of the first lens has a convex surface, and this facilitates light beam convergence, so that a diameter of a light beam entering the second lens group G2 is small. Therefore, a clear aperture of the optical lens 10 can be effectively increased while a module size is considered, and the optical lens 10 has a small f-number. The near-optical-axis region of the object-side surface of the first lens L1 is a region of 1/50 of a caliber height of the object-side surface of the first lens L1. The object-side surface of the first lens L1 may be a spherical surface, and this helps reduce processing difficulty. Alternatively, the object-side surface of the first lens L1 may be an aspheric surface, and this increases a degree of design freedom, and helps improve image quality.

In some embodiments, the first lens group G1 includes a first lens L1, a second lens L2, and a third lens L3 that are arranged from the object side to the image side. The first lens L1 has positive focal power, the second lens L2 has negative focal power, and the third lens L3 has positive focal power. In this implementation, the focal power of the first lens L1, the focal power of the second lens L2, and the focal power of the third lens L3 are properly configured. This is conducive to design of a wide aperture, improves a clear aperture, and ensures good imaging quality.

In some embodiments, the optical lens 10 satisfies $0.5 \le TTL/EFL \le 5$, and when the optical lens 10 is in a working state, TTL is a distance from an object-side surface of a first lens in the first lens group to an imaging plane on the optical axis. The first lens L1 is a lens closest to the object side in the first lens group G1. For example, a value of TTL/EFL may be 1, 1.5, 2, 2.5, 3, 4, or the like. Limiting a range of TTL/EFL helps miniaturize the optical lens 10.

In some embodiments, the optical lens 10 satisfies $F1/EFL \le 5$, where F1 is a focal length of the first lens group G1. For example, a value of F1/EFL may be 1, 1.5, 2, 2.5, 3.5, or the like. An appropriate range of F1/EFL is limited, so that focal power of the first lens group G1 can be properly configured, and an f-number is decreased. This is conducive to design of a wide aperture, improves a clear aperture, and ensures good imaging quality.

In some embodiments, the optical lens 10 satisfies: $1 \text{ mm} \le \phi1 \le 30 \text{ mm}$, and $\phi1$ is a diameter of a maximum effective region of the first lens group G1. For example, a value of $\phi1$ may be 4 mm, 10 mm, 20 mm, 22 mm, 25 mm, or the like. A larger diameter of the maximum effective region of the first lens group G1 indicates a larger image height size of the optical lens 10, so that the optical lens 10 is featured in a large image height, and this helps increase imaging definition and improve imaging quality.

In some embodiments, the optical lens 10 satisfies: $1 \text{ mm} \le \phi2 \le 30 \text{ mm}$, and $\phi2$ is a diameter of a maximum effective region of the second lens group G2. For example, a value of $\phi2$ may be 4 mm, 10 mm, 20 mm, 22 mm, 25 mm, or the like. A larger diameter of the maximum effective region of the second lens group G2 indicates a larger image height size of the optical lens 10, so that the optical lens 10 is featured in a large image height, and this helps increase imaging definition and improve imaging quality.

In some embodiments, the optical lens 10 satisfies the following relational expression: $0.3 \text{ mm} \le h1 \le 50 \text{ mm}$, where h1 is a maximum pop-up height of the first lens group G1, and the maximum pop-up height of the first lens group G1 is a maximum moving distance of the first lens group G1 when the optical lens 10 is switched from a non-working state to a working state. For example, a value of h1 may be 1 mm, 10 mm, 20 mm, 30 mm, 40 mm, or the like. In this implementation of this application, the maximum pop-up height of the first lens group G1 is small, that is, a displacement of the first lens group G1 is small. In this way, a requirement on power of a motor is small, and a volume of the motor used to drive the first lens group to move is reduced, so that the camera module 200 is more easily miniaturized.

In some embodiments, the optical lens 10 satisfies the following relationship: $0.3 \text{ mm} \le h2 \le 50 \text{ mm}$, where h2 is a maximum pop-up height of the second lens group G2, and the maximum pop-up height of the second lens group G2 a maximum moving distance of the second lens group G2 when the optical lens 10 is switched from a non-working state to a working state. For example, a value of h2 may be 1 mm, 10 mm, 20 mm, 30 mm, 40 mm, or the like. In this implementation of this application, the maximum pop-up height of the second lens group G2 is small, that is, a displacement of the second lens group is small. In this way, a requirement on power of a motor is small, and a volume of the motor used to drive the second lens group G2 to move is reduced, so that the camera module 200 is more easily miniaturized.

In some embodiments, an object distance range of the optical lens 10 is from infinite to 20 mm, and the optical lens 10 in this application can perform clear imaging within the object distance range of infinite to 20 mm. It should be noted that, in this application, that the object distance is infinite means that the object distance is greater than or equal to 2500 mm, and that the object distance is a macro distance means that the object distance is less than or equal to 200 mm. For example, in this application, macro image shooting with the object distance of 50 mm or 20 mm may be implemented.

In some embodiments, a focusing stroke of the second lens group G2 is less than or equal to 50 mm. When the focusing stroke of the second lens group G2 is greater than 50 mm, a high requirement on power of the motor is imposed. In this implementation of this application, the focusing stroke of the second lens group G2 is limited to be less than or equal to 50 mm, and therefore imposes a low requirement on power of the motor.

In some embodiments, the optical lens 10 includes a variable aperture, and a size of the variable aperture decreases in a focusing process in which the optical lens 10 switches from the long shot to the close-up shot. During long-shot image shooting, the variable aperture can be adjusted to increase an aperture size. A depth of field is low, and a blurring effect is good, which is beneficial to long-shot image shooting. During macro image shooting, to improve image shooting definition, the blurring effect is not recommended. Therefore, the variable aperture needs to be adjusted to a smaller value to increase a depth of field during macro image shooting and improve image quality during macro image shooting.

The variable aperture may be located at any position of the first lens group G1, or at any position of the second lens group G2, or at any position between the first lens group G1 and the second lens group G2. This is not limited in this application.

The variable aperture may be a spacer structure or a variable fan blade structure. Alternatively, the variable aperture may be implemented by using a surface spraying process, for example, the variable aperture is formed by spraying a light shielding material on a lens. The position of the variable aperture may be fixed or may be variable. For example, the position of the variable aperture is variable, and the variable aperture may be adjusted based on a focusing status, to be located between different lenses.

In some embodiments, the optical lens 10 satisfies the following relationship: $0.5 \leq \text{Fno} \leq 8$, where Fno is an f-number of the optical lens 10. A small Fno indicates a wide aperture, and a large Fno indicates a small aperture. For example, a value of Fno may be 0.8, 1.6, 1.8, 2.4, 4, or the like. During long-shot image shooting, the variable aperture may be adjusted to reduce the Fno to obtain a wide aperture, and a blurring effect is good, which is beneficial to long-shot image shooting. During macro image shooting, the Fno is increased and the aperture is decreased to improve the image quality during macro image shooting.

In some embodiments, the optical lens 10 satisfies the following relational expression: $5 \text{ mm} \leq \text{ox1} + \text{ox2} + \text{ox3} \leq 30 \text{ mm}$, where ox1 is a thickness of the first lens group G1 on the optical axis, ox2 is a thickness of the second lens group G2 on the optical axis, and ox3 is a thickness of the third lens group G3 on the optical axis. For example, a value of ox1 + ox2 + ox3 may be 10 mm, 15 mm, 20 mm, or the like. The optical lens 10 in this application may be used for a pop-up camera module, or may be used for a periscope camera module. The pop-up camera module is used as an example. In an implementation of this application, it is limited that ox1 + ox2 + ox3 $\leq$ 30 mm, so that it is ensured that the optical lens 10 has a small size when being folded, and avoids a protrusion of a part of the optical lens 10 to affect a weight and an appearance. It is limited that ox 1 + ox2 + ox3 $\geq$ 5 mm, so that the optical lens 10 is featured in a large image height, and this helps increase imaging definition and improve imaging quality.

In some embodiments, an optical surface of at least one lens in the third lens group is an aspheric surface. In this way, there is different focal power from a near-axis region to an out-field-of-view region, so that an image has a more balanced image quality, aberration is corrected, and imaging quality is improved. And/or an optical surface of at least one lens of the optical lens 10 may be a free curved surface, to correct aberration. The aspheric surface is a surface that is rotationally symmetric around the optical axis O. The free curved surface may have no symmetry axis, or may be symmetric in one direction, or may be symmetric in two directions.

In some embodiments, the optical lens 10 includes a liquid lens and/or a liquid crystal lens, and the liquid lens and/or the liquid crystal lens are/is located in the first lens group G1. In this implementation, a focus adjustment effect may be enhanced by using the liquid lens or the liquid crystal lens, to implement ultra-macro image shooting. The liquid lens is a mechanical part that uses liquid as a lens and changes a focal length by changing a curvature of the liquid. In another implementation, the liquid lens or the liquid crystal lens may alternatively be located in the second lens group G2.

In some embodiments, the optical lens 10 includes a diffraction element, and the diffraction element is located in the first lens group. In this implementation, the diffraction element is configured to reduce chromatic aberration and a volume of the optical lens, to improve imaging quality of the optical lens 10 and implement miniaturization of the optical lens 10.

In some embodiments, the at least one lens of the optical lens 10 may use a special-shape technology, to reduce a size of the optical lens 10. For example, the at least one lens in the first lens group G1 may have a notch used to reduce a height of the lens. The notch may be implemented through an I-CUT process. The notch used to reduce the height of the lens is disposed on the at least one lens of the first lens group G1, so that a size of the optical lens 10 in a height direction can be effectively reduced, so that the optical lens 10 can be better applicable to a miniaturized electronic device, and an application scope of the optical lens 10 is increased. In addition, because a height of the lens decreases in a notch manner, a large clear aperture may be set for the lens, so that an amount of light admitted through the optical lens 10 is increased, and imaging quality of the optical lens 10 is better. In addition, a special-shape technology may be used on a structural support of a lens like a lens tube or a partition, to reduce the size of the optical lens.

In some embodiments, a peripheral side surface or a supporting surface of at least one lens of the optical lens 10 may be blackened or roughened, to eliminate stray light and improve imaging quality. The blackening may be to coat or plate black ink or another extinction material, or may be to bond a film. The roughening is mainly used to increase roughness. Certainly, in some other embodiments, the optical lens 10 may eliminate stray light in another manner. This is not strictly limited in embodiments of this application.

In some embodiments, the optical lens 10 satisfies the following relational expression: 2 mm $\leq$ ImgH $\leq$ 10 mm, where ImgH is a maximum image height of the optical lens, and a diagonal size of a photosensitive element is twice the maximum image height of the optical lens. In this implementation of this application, a range of ImgH is limited, so that the optical lens is featured in a large target surface, and definition of image quality is high.

In some implementations, the optical lens 10 satisfies the following relationship: FOV $\leq$ 140°, where FOV is a full field of view of the optical lens 10.

In some embodiments, a plurality of lenses of the optical lens 10 are assembled by using an active alignment (active alignment, AA) process, to ensure assembly precision.

In some embodiments, when object-side surfaces and/or image-side surfaces of some lenses in the optical lens 10 are/is aspheric surfaces, the object-side surfaces and/or the image-side surfaces of the some lenses may be limited by using but not limited to the following aspheric surface formula:

$$z = \frac{cr^2}{1 + \sqrt{1 - (1 + k)\,c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between a point on an aspheric curve and the optical axis; c is a curvature; k is a cone coefficient; and $\alpha_i$ is an $i^{th}$-order aspheric coefficient.

The following describes some specific rather than limiting examples of this application in more detail by using four embodiments with reference to FIG. 2 to FIG. 22.

**Embodiment 1**

Refer to FIG. 2, FIG. 3, and FIG. 4. A camera module 200 includes an optical lens 10, a light filter 20, and a photosensitive element 30. In this embodiment, the optical lens 10 includes an aperture 40, a first lens group G1, a second lens group G2, and a third lens group G3 that are sequentially disposed from an object side to an image side. The first lens group G1 has positive focal power, the first lens group G1 includes a first lens L1, a second lens L2, and a third lens L3, the second lens group G2 has negative focal power, the second lens group G2 includes a fourth lens L4 and a fifth lens L5, the third lens group G3 has positive focal power, the third lens group G3 includes a sixth lens L6, and the first lens L1 to the sixth lens L6 are sequentially arranged from the object side to the image side. The aperture 40 is a variable aperture, and a size of the aperture may be adjusted based on a requirement. The aperture 40 is located on an object-side surface of the first lens L1. In another implementation, the aperture 40 may alternatively be located at another position. This is not limited in this application.

In this embodiment, the first lens L1 has positive focal power, the first lens L1 includes an object-side surface S1 and an image-side surface S2, the second lens L2 has negative focal power, the second lens L2 includes an object-side surface S3 and an image-side surface S4, the third lens L3 has positive focal power, the third lens L3 includes an object-side surface S5 and an image-side surface S6, the fourth lens L4 has negative focal power, the fourth lens L4 includes an object-side surface S7 and an image-side surface S8, the fifth lens L5 has positive focal power, the fifth lens L5 includes an object-side surface S9 and an image-side surface S10, the sixth lens L6 has positive focal power, and the sixth lens L6 includes an object-side surface S11 and an image-side surface S12. In addition, the light filter 20 is disposed after the sixth lens L6, and includes an object-side surface S13 and an image-side surface S14. An imaging plane S15 (not shown in FIG. 2, FIG. 3, and FIG. 4) is located on image sides of all lenses in the optical lens 10, and the imaging plane S15 is a carrier plane on which an image is formed after light sequentially passes through the lenses in the optical lens 10.

In this embodiment, the first lens L1 is made of glass, and the second lens L2 to the sixth lens L6 are made of plastic. In another embodiment, lenses in the first lens group G1, the second lens group G2, and the third lens group G3 may all be made of glass or plastic, or may include both a glass material and a plastic material. This is not limited in this application.

In this embodiment, when the camera module 200 is switched from a non-working state (a folded state) to a working state (a long-shot state or a close-up state), the first lens group G1 and the second lens group G2 move toward the object side along an optical axis O, and the third lens group G3 does not move. When the camera module 200 is switched from a working state to a non-working state, the first lens group G1 and the second lens group G2 move toward the image side along an optical axis O, and the third lens group G3 does not move. In this way, an overall size of the camera module 200 is low, and a corresponding part of an electronic device 1000 does not protrude.

In this embodiment, when the camera module 200 is switched from the long-shot state to the close-up state, the second lens group G2 moves toward the image side along the optical axis O, and the first lens group G1 and the third lens group G3 do not move, to implement focusing.

In this embodiment, when the camera module 200 is switched from the close-up state to the long-shot state, the second lens group G2 moves toward the object side along the optical axis O, and the first lens group G1 and the third lens group G3 do not move, to implement focusing.

Table 1a shows a curvature radius, a thickness, a refractive index (Nd), and an Abbe number of each lens and the light filter 20 of the optical lens 10 in Embodiment 1 when the optical lens 10 is in a long-shot working state and a close-up working state. The thickness includes a thickness of a lens and a spacing between lenses, and the Abbe number is a dispersion coefficient.

**Table 1a**

| Surface number | Remarks | Surface type | Curvature radius (mm) | Thickness (mm) | Refractive index | Abbe number |
|---|---|---|---|---|---|---|
| Object plane | | Flat surface | Infinite | Infinite/50 | | |
| S1 | First lens | Aspheric surface | 5.8969 | 2.0107 | 1.81 | 40.99 |
| S2 | | Aspheric surface | -28.0742 | 0.2983 | | |
| S3 | Second lens | Aspheric surface | -29.8654 | 0.7024 | 1.66 | 20.40 |
| S4 | | Aspheric surface | 5.9283 | 1.0135 | | |
| S5 | Third lens | Aspheric surface | 11.2384 | 1.2354 | 1.55 | 55.91 |
| S6 | | Aspheric surface | -12.1515 | 0.1068/2.3500 | | |
| S7 | Fourth lens | Aspheric surface | -8.6653 | 0.5000 | 1.55 | 55.91 |
| S8 | | Aspheric surface | 6.5881 | 1.2057 | | |
| S9 | Fifth lens | Aspheric surface | 3.9177 | 0.8000 | 1.66 | 20.40 |
| S10 | | Aspheric surface | 4.7873 | 4.6882/2.4450 | | |
| S11 | Sixth lens | Aspheric surface | 7.1198 | 0.9085 | 1.55 | 55.91 |
| S12 | | Aspheric surface | 10.6616 | 1.0489 | | |
| S13 | Light filter | Spherical surface | Infinite | 0.2100 | 1.52 | 64.20 |
| S14 | | Spherical surface | Infinite | 0.8217 | | |
| S15 | Imaging plane | Flat surface | | | | |

0.1068/2.3500 in Table 1a means that when an object distance is infinite, a spacing between the first lens group G1 and the second lens group G2 on the optical axis is 0.1068 mm, and when the object distance is 50 mm, the spacing between the first lens group G1 and the second lens group G2 on the optical axis is 2.3500 mm. 4.6882/2.4450 means that when the object distance is infinite, a spacing between the second lens group G2 and the third lens group G3 on the optical axis is 4.6882 mm, and when the object distance is 50 mm, the spacing between the first lens group G1 and the second lens group G2 on the optical axis is 2.4450 mm.

Table 1b is an aspheric coefficient of each lens of the optical lens 10 in Embodiment 1.

**Table 1b**

| Surface number | K | A4 | A6 | A8 | A10 |
|---|---|---|---|---|---|
| S1 | -1.8498E-02 | -1.0911E-04 | -2.0289E-06 | 2.0546E-06 | -4.6265E-07 |
| S2 | 2.6459E+00 | -5.6453E-04 | 4.6751E-04 | -7.2745E-05 | 7.0183E-06 |
| S3 | -2.1331E+00 | -4.1819E-03 | 1.5009E-03 | -2.2173E-04 | 2.1658E-05 |
| S4 | -2.1739E-01 | -3.6914E-03 | 6.3502E-04 | 2.6582E-05 | -1.5674E-05 |
| S5 | 7.2554E-01 | -8.9099E-04 | -7.3417E-04 | 0.000306653 | -5.5683E-05 |
| S6 | 2.4160E+00 | 1.1891E-03 | -7.6793E-04 | 3.7786E-04 | -9.8119E-05 |
| S7 | 7.1007E-01 | 1.4813E-02 | -1.9147E-03 | 2.4051E-04 | -2.7410E-05 |
| S8 | 2.3520E+00 | 0.005257853 | 8.1951E-04 | -4.9103E-04 | 1.4392E-04 |
| S9 | 8.1615E-01 | -1.9943E-02 | 5.9701E-04 | -1.7673E-04 | 4.8162E-05 |
| S10 | -9.9505E-01 | -1.4766E-02 | 3.5308E-04 | 3.8139E-05 | -1.4851E-05 |
| S11 | 7.9449E-01 | -2.3304E-03 | 2.6027E-04 | -1.6676E-04 | 3.5825E-05 |
| S12 | 3.6848E+00 | -2.3102E-03 | 4.4033E-04 | -2.6517E-04 | 5.3786E-05 |
| Surface number | A12 | A14 | A16 | A18 | A20 |
| S1 | 3.1199E-08 | -6.7238E-10 | 1.0271E-11 | | |
| S2 | -3.8610E-07 | 1.1913E-08 | -1.7100E-10 | | |
| S3 | -1.2717E-06 | 3.8659E-08 | -4.7703E-10 | | |
| S4 | 2.4929E-06 | -1.8638E-07 | 4.6864E-09 | | |
| S5 | 6.8355E-06 | -4.5683E-07 | 1.3788E-08 | | |
| S6 | 1.5933E-05 | -1.3839E-06 | 5.2902E-08 | | |
| S7 | 3.0269E-06 | -2.6229E-07 | 1.0536E-08 | | |
| S8 | -2.2886E-05 | 1.8241E-06 | -5.8718E-08 | | |
| S9 | -1.2119E-05 | 1.5752E-06 | -9.7901E-08 | | |
| S10 | 2.1242E-06 | -1.9724E-07 | 5.9153E-09 | | |
| S11 | -4.2289E-06 | 2.5476E-07 | -6.0390E-09 | | |
| S12 | -5.9233E-06 | 3.3599E-07 | -7.5628E-09 | | |

In this embodiment, all the object-side surfaces and the image-side surfaces of the first lens L1 to the sixth lens L6 are aspheric surfaces, and may be limited by using but not limited to the following aspheric surface formula:

$$z = \frac{cr^2}{1 + \sqrt{1 - (1+k)\,c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between a point on an aspheric curve and the optical axis; c is a curvature; k is a cone coefficient; and $\alpha_i$ is an $i$th-order aspheric coefficient.

Table 1c is a basic parameter of the optical lens 10 in Embodiment 1. In Table 1c, f1 to f6 are focal lengths of the first lens L1 to the sixth lens L6 respectively, F1 to F3 are focal lengths of the first lens group G1 to the third lens group G3 respectively, ImgH is a maximum image height of the optical lens 10, the maximum image height is half of a diagonal size of a photosensitive element, and Fno is an f-number.

**Table 1c**

| Parameter | ImgH | EFL | f1 | f2 | f3 | f4 | f5 | f6 | Fno |
|---|---|---|---|---|---|---|---|---|---|
| Value (mm) | 3.6 | 14.55 | 6.15 | -7.36 | 10.88 | -6.76 | 23.64 | 35.94 | 1.6 |
| Parameter | F1 | F2 | F3 | ox1 + ox2 + ox3 | TTL | F1/EFL | F2/EFL | Nearest object distance | |
| Value (mm) | 8.23 | -9.35 | 35.94 | 8.6685 | 15.24 | 0.5656 | -0.6426 | 50 | |

In this embodiment, when the optical lens 10 is switched from a long shot to a close-up shot, for example, switched to focus at a macro distance of 50 mm, the spacing between the first lens group G1 and the second lens group G2 is increased from 0.1068 mm to 2.3500 mm, a focusing stroke of the second lens group G2 is 2.2432 mm, the focusing stroke is short, and a focusing effect is good, so that a good macro image shooting effect can be implemented. In this embodiment, the second lens group G2 is moved toward the image side to implement macro focusing image shooting, and the first lens group G1 does not move. In this way, macro image shooting can be implemented without increasing a size of the optical lens 10.

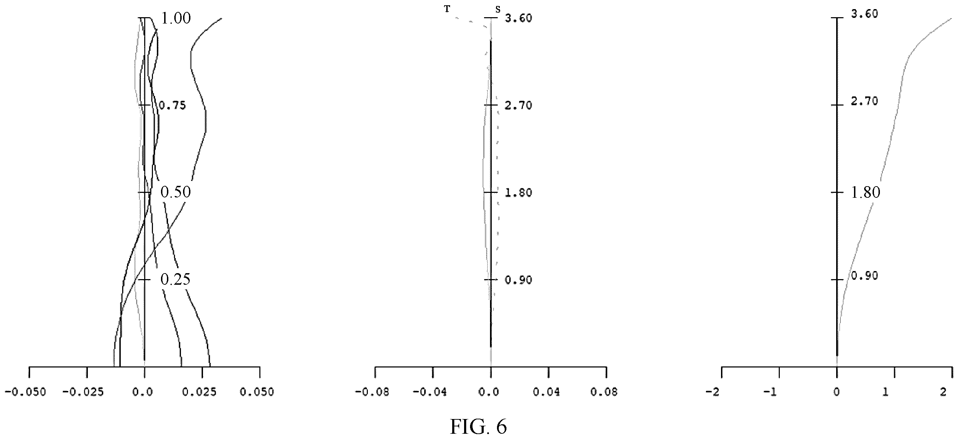

FIG. 6 is a representation diagram of optical performance of an optical lens 10 according to Embodiment 1 when an object distance is infinite.

FIG. 6 includes axial chromatic aberration curve diagram, an astigmatism curvature of field diagram, and a distortion diagram of the optical lens 10 when the object distance is infinite. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. The values shown in FIG. 6 are all small, and axial aberration (spherical aberration, chromatic aberration, or the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. As shown in FIG. 6, field curvatures are small in both directions, and the system has a good focal depth. The distortion diagram is used to represent relative deviations of beam convergence points (actual image heights) from an ideal image height in different fields of view. FIG. 6 shows that the distortions are all within 2%. This may ensure that there is no clear deformation.

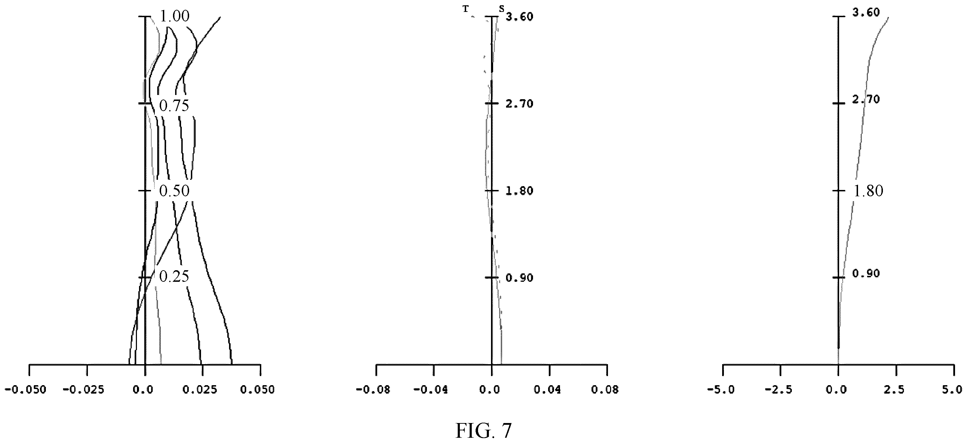

FIG. 7 is a representation diagram of optical performance of an optical lens 10 according to Embodiment 1 when an object distance is 50 mm.

FIG. 7 includes an axial chromatic aberration curve diagram, an astigmatism curvature of field diagram, and a distortion diagram of the optical lens 10 when the object distance is 50 mm. The axial chromatic aberration curve diagram includes spherical aberration curves corresponding to different bands (the figure includes 650 nm, 610 nm, 555 nm, 510 nm, and 470 nm in the figure) of a system. Values shown in FIG. 7 are all small, and axial aberration (spherical aberration, chromatic aberration, and the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. When a field of view value is excessively large, image quality of the field of view is poor or a high-level aberration exists. As shown in FIG. 7, field curves in both directions are small, and the system has a good focal depth. The distortion diagram is used to represent a relative deviation between a convergence point (actual image height) of a light beam in different fields of view and an ideal image height. FIG. 7 shows that the distortions are all within 3%. This may ensure that there is no clear deformation.

It can be learned from FIG. 6 and FIG. 7 that the optical lens 10 provided in Embodiment 1 can implement good imaging quality when the object distance is infinite and the object distance is a macro distance of 50 mm.

**Embodiment 2**

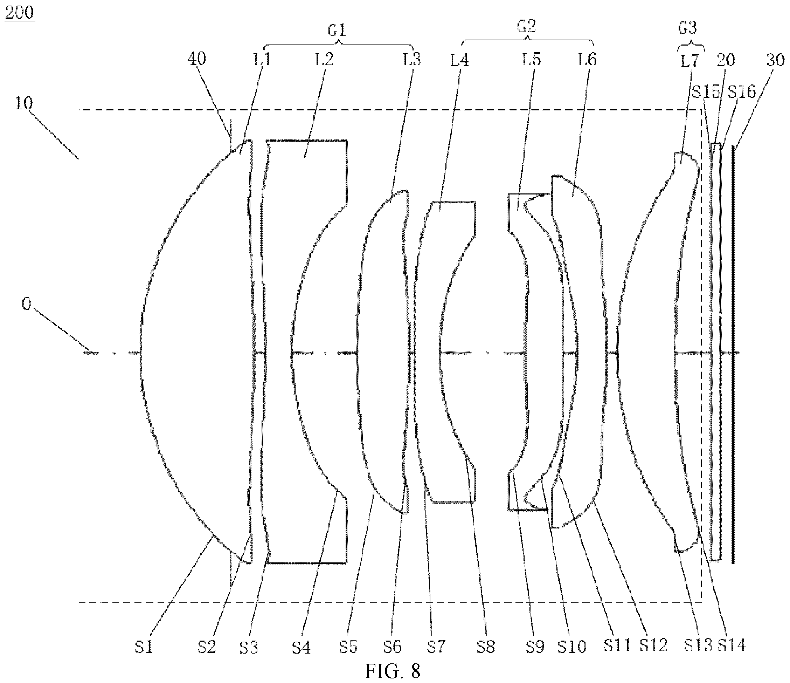

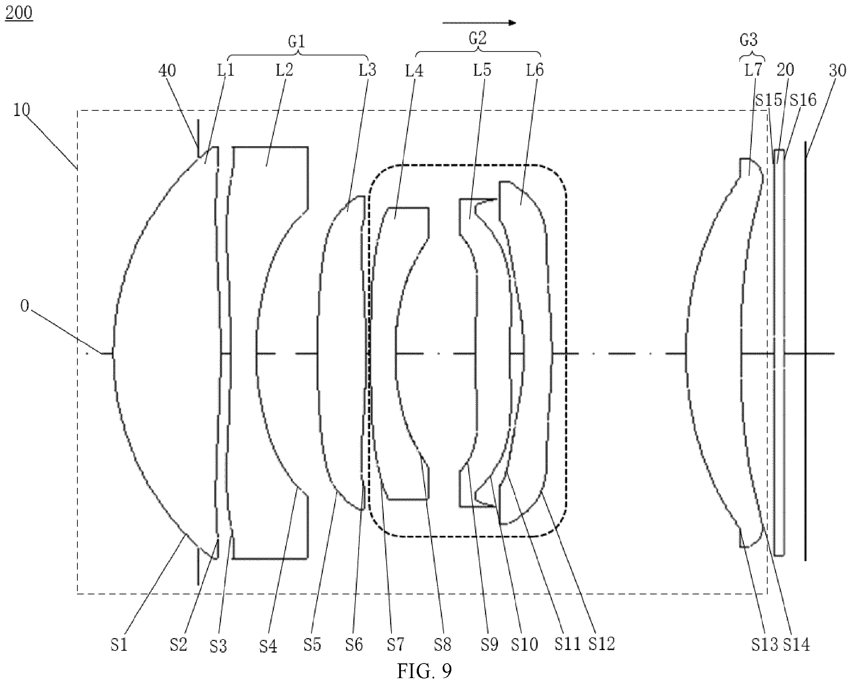

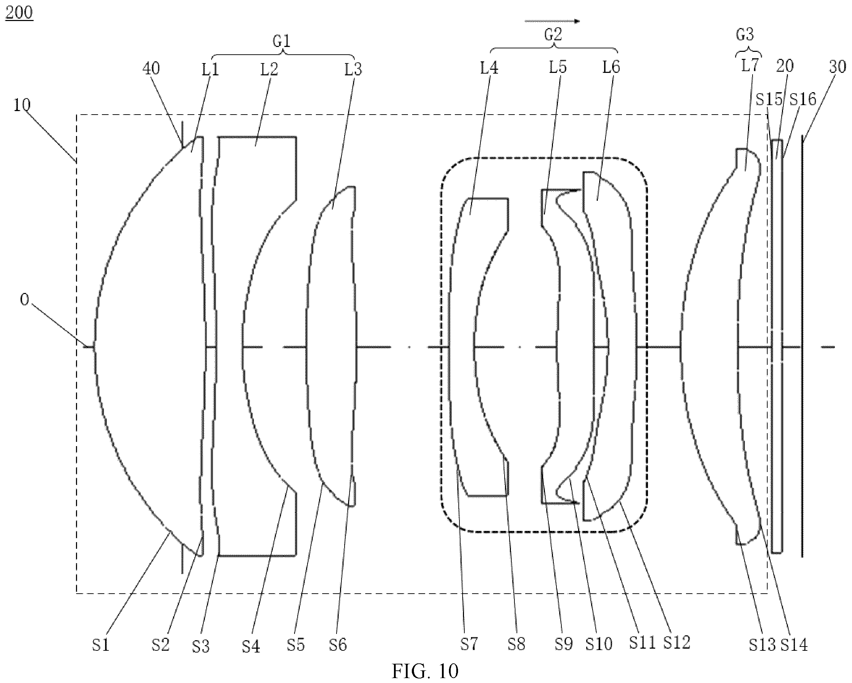

FIG. 8 is a diagram of a structure of a camera module 200 according to Embodiment 2 of this application. FIG. 9 is a diagram of a structure of the camera module 200 shown in FIG. 8 in a working state. FIG. 10 is a diagram of a structure of the camera module 200 shown in FIG. 8 in another working state. The camera module 200 shown in FIG. 8 is in a non-working state. FIG. 9 is a long-shot working state of the camera module 200 shown in FIG. 8 when an object distance is infinite. FIG. 10 is a close-up working state of the camera module 200 shown in FIG. 8 when the camera module 200 performs macro image shooting.

The camera module 200 includes an optical lens 10, a light filter 20, and a photosensitive element 30. In this embodiment, the optical lens 10 includes an aperture 40, a first lens group G1, a second lens group G2, and a third lens group G3 that are sequentially disposed from an object side to an image side. The first lens group G1 has positive focal power, the first lens group G1 includes a first lens L1, a second lens L2, and a third lens L3, the second lens group G2 has negative focal power, the second lens group G2 includes a fourth lens L4, a fifth lens L5 and a sixth lens L6, the third lens group G3 has positive focal power, the third lens group G3 includes a seventh lens L7, and the first lens L1 to the seventh lens L7 are sequentially arranged from the object side to the image side. The aperture 40 is a variable aperture, and a size of the aperture may be adjusted based on a requirement. The aperture 40 is located on an object-side surface of the first lens L1. In another implementation, the aperture 40 may alternatively be located at another position. This is not limited in this application.

In this embodiment, the first lens L1 has positive focal power, the first lens L1 includes an object-side surface S1 and an image-side surface S2, the second lens L2 has negative focal power, the second lens L2 includes an object-side surface S3 and an image-side surface S4, the third lens L3 has positive focal power, the third lens L3 includes an object-side surface S5 and an image-side surface S6, the fourth lens L4 has negative focal power, the fourth lens L4 includes an object-side surface S7 and an image-side surface S8, the fifth lens L5 has positive focal power, the fifth lens L5 includes an object-side surface S9 and an image-side surface S10, the sixth lens L6 has negative focal power, the sixth lens L6 includes an object-side surface S11 and an image-side surface S12, the seventh lens L7 has positive focal power, and the seventh lens L7 includes an object-side surface S13 and an image-side surface S14. In addition, the light filter 20 is disposed after the seventh lens L7, and includes an object-side surface S15 and an image-side surface S16. An imaging plane S17 (not shown in FIG. 8, FIG. 9, and FIG. 10) is located on image sides of all lenses in the optical lens 10, and the imaging plane S17 is a carrier plane on which an image is formed after light sequentially passes through the lenses in the optical lens 10. In this embodiment, the first lens L1 is made of glass, and the second lens L2 to the seventh lens L7 are made of plastic.

In this embodiment, when the camera module 200 is switched from a non-working state (a folded state) to a working state (a long-shot state or a close-up state), the first lens group G1 and the second lens group G2 move toward the object side along the optical axis O, and the third lens group G3 does not move. When the camera module 200 is switched from the working state to the non-working state, the first lens group G1 and the second lens group G2 move toward the image side along the optical axis O, and the third lens group G3 does not move. In this way, an overall size of the camera module 200 is low, and a corresponding part of an electronic device 1000 does not protrude.

In this embodiment, when the camera module 200 is switched from the long-shot state to the close-up state, the second lens group G2 moves toward the image side along the optical axis O, and the first lens group G1 and the third lens group G3 do not move, to implement focusing.

In this embodiment, when the camera module 200 is switched from the close-up state to the long-shot state, the second lens group G2 moves toward the object side along the optical axis O, and the first lens group G1 and the third lens group G3 do not move, to implement focusing.

Table 2a shows a curvature radius, a thickness, a refractive index (Nd), and an Abbe number of each lens and the light filter 20 of the optical lens 10 in Embodiment 2 when the optical lens 10 is in a long-shot working state and a close-up working state. The thickness includes a thickness of a lens and a spacing between lenses, and the Abbe number is a dispersion coefficient.

**Table 2a**

| Surface number | Description | Surface type | Curvature radius (mm) | Thickness (mm) | Refractive index | Abbe number |
|---|---|---|---|---|---|---|
| Object plane | | Flat surface | Infinite | Infinite/50 | | |
| S1 | First lens | Aspheric surface | 5.2992 | 2.2000 | 1.81 | 40.99 |
| S2 | | Aspheric surface | -24.1791 | 0.2069 | | |
| S3 | Second lens | Aspheric surface | -48.3323 | 0.5264 | 1.66 | 20.40 |
| S4 | | Aspheric surface | 5.1192 | 1.2652 | | |
| S5 | Third lens | Aspheric surface | 17.6790 | 0.9978 | 1.55 | 55.91 |
| S6 | | Aspheric surface | -16.3537 | 0.1/1.846 | | |

(continued)

| Surface number | Description | Surface type | Curvature radius (mm) | Thickness (mm) | Refractive index | Abbe number |
|---|---|---|---|---|---|---|
| Object plane | | Flat surface | Infinite | Infinite/50 | | |
| S7 | Fourth lens | Aspheric surface | -289.5834 | 0.5000 | 1.55 | 55.91 |
| S8 | | Aspheric surface | 5.4957 | 1.6426 | | |
| S9 | Fifth lens | Aspheric surface | 9.9311 | 0.7204 | 1.66 | 20.40 |
| S10 | | Aspheric surface | 18.8802 | 0.2830 | | |
| S11 | Sixth lens | Aspheric surface | -4.9559 | 0.5748 | 1.55 | 55.91 |
| S12 | | Aspheric surface | -9.2963 | 2.7640/1.018 | | |
| S13 | Seventh lens | Aspheric surface | 6.5255073 | 1.1244 | 1.55 | 55.91 |
| S14 | | Aspheric surface | 18.009913 | 0.6793 | | |
| S15 | Light filter | Spherical surface | Infinite | 0.2100 | 1.52 | 64.20 |
| S16 | | Spherical surface | Infinite | 1.0649 | | |
| S17 | Imaging plane | Flat surface | | | | |

0.1/1.846 in Table 2a means that when an object distance is infinite, a spacing between the first lens group G1 and the second lens group G2 on the optical axis is 0.1 mm, and when an object distance is 50 mm, a spacing between the first lens group G1 and the second lens group G2 on the optical axis is 1.846 mm. 2.7640/1.018 means that when the object distance is infinite, a spacing between the second lens group G2 and the third lens group G3 on the optical axis is 2.7640 mm, and when the object distance is 50 mm, the spacing between the first lens group G1 and the second lens group G2 on the optical axis is 1.018 mm.

Table 2b is an aspheric coefficient of each lens of the optical lens 10 in Embodiment 2.

**Table 2b**

| Surface number | K | A4 | A6 | A8 | A10 |
|---|---|---|---|---|---|
| S1 | 0.0000E+00 | 5.0027E-05 | -4.5508E-06 | 3.5952E-06 | -9.4836E-07 |
| S2 | 0.0000E+00 | -3.2195E-04 | 4.6495E-04 | -6.9503E-05 | 6.7836E-06 |
| S3 | 0.0000E+00 | -6.3549E-03 | 2.1494E-03 | -3.1944E-04 | 3.0479E-05 |
| S4 | 0.0000E+00 | -5.1819E-03 | 1.5711E-03 | -1.8555E-04 | 2.3473E-05 |
| S5 | 0.0000E+00 | 3.6959E-04 | -3.1246E-04 | 0.000142128 | -1.6388E-05 |
| S6 | 0.0000E+00 | 1.2686E-03 | -1.0401E-04 | 5.8351E-05 | -3 .2377E-06 |
| S7 | 0.0000E+00 | 1.0289E-02 | -1.9951E-03 | 4.3534E-04 | -8.4473E-05 |
| S8 | 0.0000E+00 | 0.010508281 | -2.0227E-03 | 5.0050E-04 | -1.1534E-04 |
| S9 | 0.0000E+00 | -1.1348E-02 | -1.1794E-03 | 2.7931E-04 | -2.7339E-04 |
| S10 | 0.0000E+00 | -1.5723E-02 | 9.2403E-04 | -3.3882E-04 | 2.5950E-05 |
| S11 | 0.0000E+00 | 3.6525E-03 | 3.7953E-03 | -8.6367E-04 | 8.4471E-05 |
| S12 | 0.0000E+00 | 6.3905E-03 | 1.4855E-03 | -3.0103E-04 | -2.1936E-05 |
| S13 | 0.0000E+00 | -2.9860E-04 | 2.5528E-04 | -9.5187E-05 | 2.5015E-05 |
| S14 | 0.0000E+00 | 1.3937E-03 | -1.3139E-04 | 7.2501E-05 | -3.1718E-05 |
| Surface number | A12 | A14 | A16 | A18 | A20 |
| S1 | 1.1226E-07 | -6.5467E-09 | 1.5015E-10 | | |
| S2 | -4.4178E-07 | 1.6969E-08 | -2.7975E-10 | | |

(continued)

| Surface number | A12 | A14 | A16 | A18 | A20 |
|---|---|---|---|---|---|
| S3 | -1.8607E-06 | 6.6641E-08 | -1.0771E-09 | | |
| S4 | -3.2295E-06 | 3.5925E-07 | -1.6530E-08 | | |
| S5 | 1.2206E-06 | 9.0495E-09 | -2.6610E-09 | | |
| S6 | 3.6037E-07 | -2.7732E-08 | 5.0423E-09 | | |
| S7 | 1.2881E-05 | -1.2299E-06 | 5.1156E-08 | | |
| S8 | 2.1768E-05 | -2.4918E-06 | 1.0631E-07 | | |
| S9 | 8.9964E-05 | -1.2303E-05 | 5.9783E-07 | | |
| S10 | 1.2483E-05 | -2.9349E-06 | 1.8122E-07 | | |
| S11 | -6.0089E-06 | 2.2460E-07 | | | |
| S12 | 8.1022E-06 | -6.9542E-07 | 2.0286E-08 | | |
| S13 | -4.3004E-06 | 5.0034E-07 | -3.8333E-08 | 1.7386E-09 | -3.5232E-11 |
| S14 | 7.5945E-06 | -1.0324E-06 | 7.9861E-08 | -3 .2622E-09 | 5.3773E-11 |

In this embodiment, all the object-side surfaces and the image-side surfaces of the first lens L1 to the seventh lens L7 are aspheric surfaces, and may be limited by using but not limited to the following aspheric surface formula:

$$z = \frac{cr^2}{1 + \sqrt{1 - (1 + k)\, c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between a point on an aspheric curve and the optical axis; c is a curvature; k is a cone coefficient; and $\alpha_i$ is an $i^{th}$-order aspheric coefficient.

Table 2c is a basic parameter of the optical lens 10 in Embodiment 2. In Table 2c, f1 to f7 are focal lengths of the first lens L1 to the seventh lens L7, F 1 to F3 are focal lengths of the first lens group G1 to the third lens group G3, ImgH is a maximum image height of the optical lens 10, the maximum image height is half of a diagonal size of a photosensitive element, and Fno is an f-number.

**Table 2c**

| Parameter | ImgH | EFL | f1 | f2 | f3 | f4 | f5 | f6 | f7 |
|---|---|---|---|---|---|---|---|---|---|
| Value (mm) | 3.6 | 14.55 | 5.53 | -6.91 | 15.7 | -9.86 | 30.44 | -20.37 | 18.09 |
| Parameter | Fno | F1 | F2 | F3 | ox 1 + ox2 + ox3 | TTL | F1/EFL | F2/EFL | Nearest object distance |
| Value (mm) | 1.6 | 8.74 | -8.2 | 18.09 | 10.04 | 14.86 | 0.6007 | -0.5636 | 50 |

In this embodiment, when the optical lens 10 is switched from a long shot to a close-up shot, for example, switched to focus at a macro distance of 50 mm, the spacing between the first lens group G1 and the second lens group G2 is increased from 0.1 mm to 1.846 mm, a focusing stroke of the second lens group G2 is 1.746 mm, the focusing stroke is short, and a focusing effect is good, so that a good macro image shooting effect can be implemented. In this embodiment, the second lens group G2 is moved toward the image side to implement macro focusing image shooting, and the first lens group G1 does not move. In this way, macro image shooting can be implemented without increasing a size of the optical lens 10.

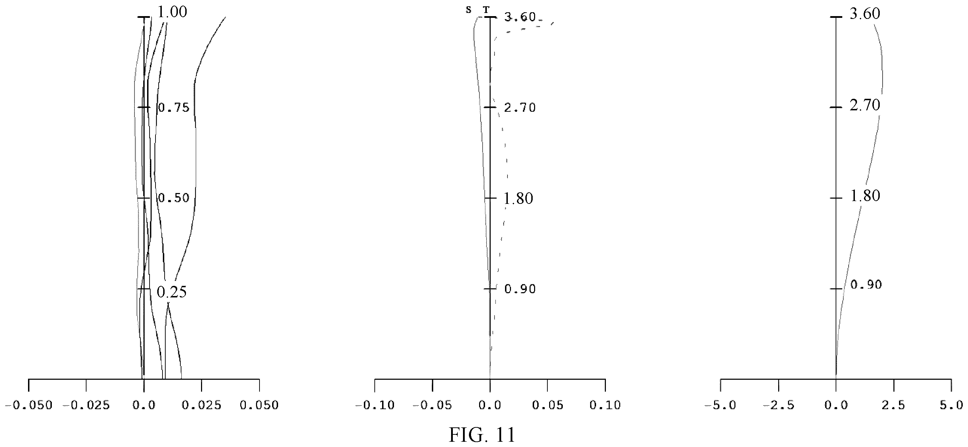

FIG. 11 is a representation diagram of optical performance of an optical lens 10 according to Embodiment 2 when an object distance is infinite.

FIG. 11 includes axial chromatic aberration curve diagram, an astigmatism curvature of field diagram, and a distortion diagram of the optical lens 10 when the object distance is infinite. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. The values shown in FIG. 11 are all small, and axial aberration (spherical aberration, chromatic aberration, or the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. As shown in FIG. 11, field curvatures are small in both directions, and the system has a good focal depth. The distortion diagram is used to represent relative deviations of beam convergence points (actual image heights) from an ideal image height in different fields of view. FIG. 11 shows that the distortions are all within 2.5%. This may ensure that there is no clear deformation.

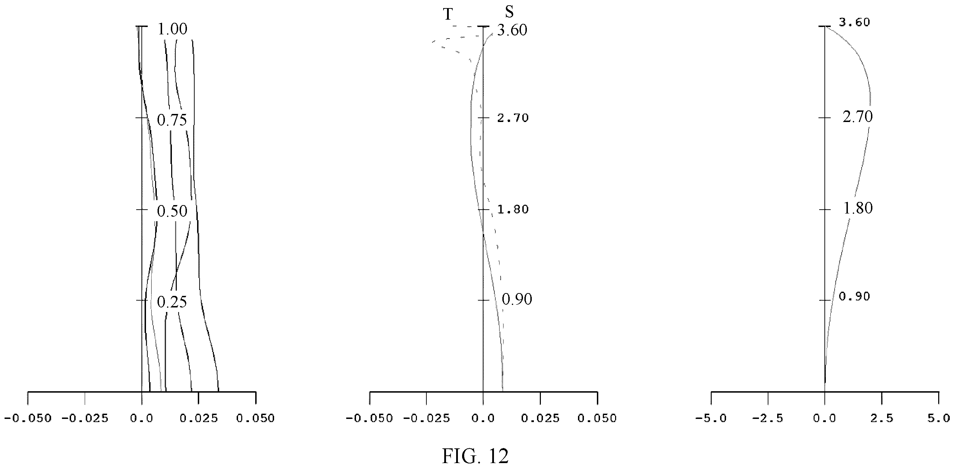

FIG. 12 is a representation diagram of optical performance of an optical lens 10 according to Embodiment 2 when an object distance is 50 mm.

FIG. 12 includes axial chromatic aberration curve diagram, an astigmatism curvature of field diagram, and a distortion diagram of the optical lens 10 when the object distance is 50 mm. The axial chromatic aberration curve diagram includes spherical aberration curves corresponding to different bands (including 650 nm, 610 nm, 555 nm, 510 nm, and 470 nm in the figure) of a system. Values shown in FIG. 12 are all small, and axial aberration (spherical aberration, chromatic aberration, and the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. When a field of view value is excessively large, image quality of the field of view is poor or a high-level aberration exists. As shown in FIG. 12, field curves in both directions are small, and the system has a good focal depth. The distortion diagram is used to represent a relative deviation between a convergence point (actual image height) of a light beam in different fields of view and an ideal image height. FIG. 12 shows that the distortions are all within 2.5%. This may ensure that there is no clear deformation.

It can be learned from FIG. 11 and FIG. 12 that the optical lens 10 provided in Embodiment 2 can implement good imaging quality when the object distance is infinite and the object distance is a macro distance of 50 mm.

**Embodiment 3**

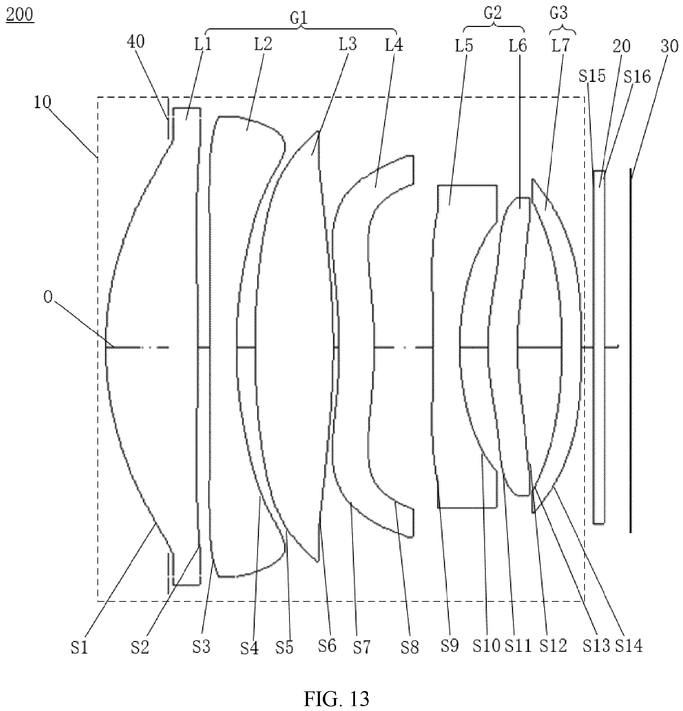

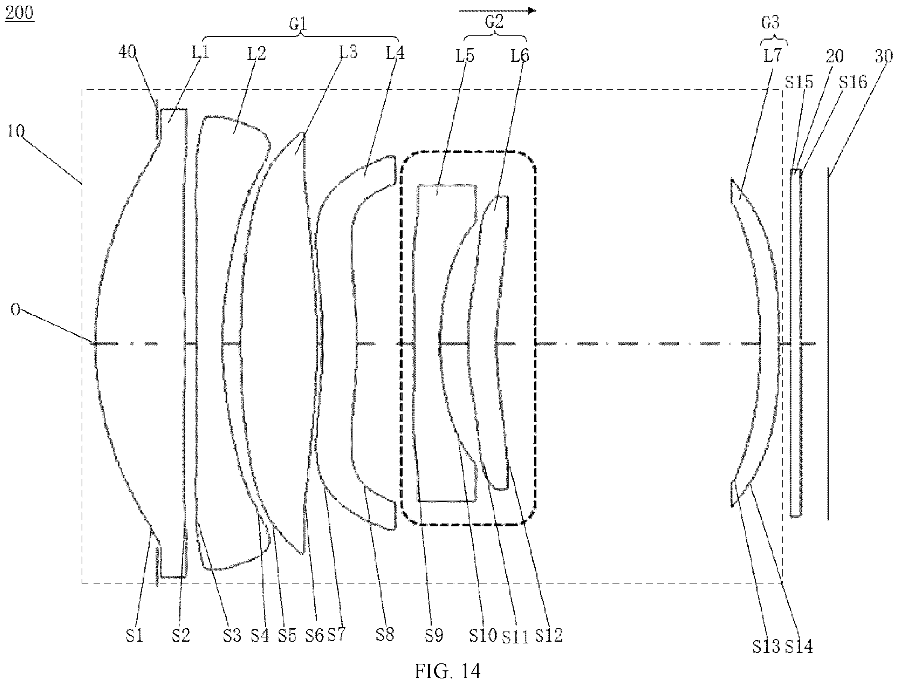

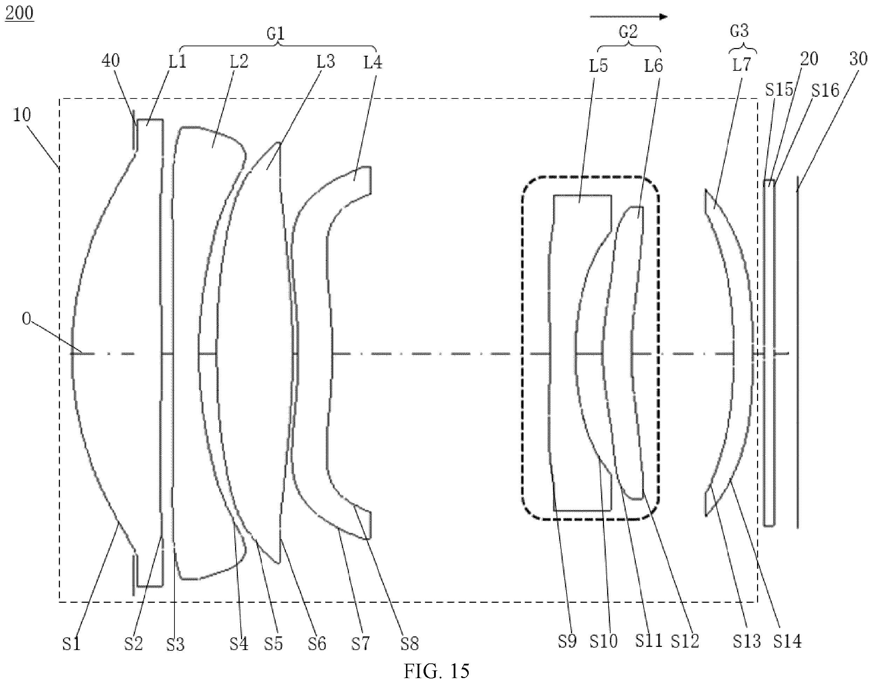

FIG. 13 is a diagram of a structure of a camera module 200 according to Embodiment 3 of this application. FIG. 14 is a diagram of a structure of the camera module 200 shown in FIG. 13 in a working state. FIG. 15 is a diagram of a structure of the camera module 200 shown in FIG. 13 in another working state. The camera module 200 shown in FIG. 13 is in a non-working state. FIG. 14 is a long-shot working state of the camera module 200 shown in FIG. 13 when an object distance is infinite. FIG. 15 is a close-up working state of the camera module 200 shown in FIG. 13 when the camera module 200 performs macro image shooting.

The camera module 200 includes an optical lens 10, a light filter 20, and a photosensitive element 30. In this embodiment, the optical lens 10 includes an aperture 40, a first lens group G1, a second lens group G2, and a third lens group G3 that are sequentially disposed from an object side to an image side. The first lens group G1 has positive focal power, the first lens group G1 includes a first lens L1, a second lens L2, a third lens L3 and a fourth lens L4, the second lens group G2 has negative focal power, the second lens group G2 includes a fifth lens L5 and a sixth lens L6, the third lens group G3 has negative focal power, the third lens group G3 includes a seventh lens L7, and the first lens L1 to the seventh lens L7 are sequentially arranged from the object side to the image side. The aperture 40 is a variable aperture, and a size of the aperture may be adjusted based on a requirement. The aperture 40 is located on an object-side surface of the first lens L1. In another implementation, the aperture 40 may alternatively be located at another position. This is not limited in this application.

In this embodiment, the first lens L1 has positive focal power, the first lens L1 includes an object-side surface S1 and an image-side surface S2, the second lens L2 has negative focal power, the second lens L2 includes an object-side surface S3 and an image-side surface S4, the third lens L3 has positive focal power, the third lens L3 includes an object-side surface S5 and an image-side surface S6, the fourth lens L4 has positive focal power, the fourth lens L4 includes an object-side surface S7 and an image-side surface S8, the fifth lens L5 has negative focal power, the fifth lens L5 includes an object-side surface S9 and an image-side surface S10, the sixth lens L6 has positive focal power, the sixth lens L6 includes an object-side surface S11 and an image-side surface S12, the seventh lens L7 has negative focal power, and the seventh lens L7 includes an object-side surface S13 and an image-side surface S14. In addition, the light filter 20 is disposed after the seventh lens L7, and includes an object-side surface S15 and an image-side surface S16. An imaging plane S17 (not shown in FIG. 13, FIG. 14, and FIG. 15) is located on image sides of all lenses in the optical lens 10, and the imaging plane S17 is a carrier plane on which an image is formed after light sequentially passes through the lenses in the optical lens 10.

In this embodiment, the first lens L1 is made of glass, and the second lens L2 to the seventh lens L7 are made of plastic.

In this embodiment, when the camera module 200 is switched from a non-working state (a folded state) to a working state (a long-shot state or a close-up state), the first lens group G1 and the second lens group G2 move toward the object side along the optical axis O, and the third lens group G3 does not move. When the camera module 200 is switched from the working state to the non-working state, the first lens group G1 and the second lens group G2 move toward the image side along the optical axis O, and the third lens group G3 does not move. In this way, an overall size of the camera module 200 is low, and a corresponding part of an electronic device 1000 does not protrude.

In this embodiment, when the camera module 200 is switched from the long-shot state to the close-up state, the second lens group G2 moves toward the image side along the optical axis O, and the first lens group G1 and the third lens group G3 do not move, to implement focusing.

In this embodiment, when the camera module 200 is switched from the close-up state to the long-shot state, the second lens group G2 moves toward the object side along the optical axis O, and the first lens group G1 and the third lens group G3 do not move, to implement focusing.

Table 3a shows a curvature radius, a thickness, a refractive index (Nd), and an Abbe number of each lens and the light filter 20 of the optical lens 10 in Embodiment 3 when the optical lens 10 is in a long-shot working state and a close-up working state. The thickness includes a thickness of a lens and a spacing between lenses, and the Abbe number is a dispersion coefficient.

**Table 3a**

| Surface number | Description | Surface type | Curvature radius (mm) | Thickness (mm) | Refractive index | Abbe number |
|---|---|---|---|---|---|---|
| Object plane | | Flat surface | Infinite | Infinite/50 | | |
| S1 | First lens | Aspheric surface | 6.2347 | 1.7657 | 1.81 | 40.99 |
| S2 | | Aspheric surface | -24.7419 | 0.2289 | | |
| S3 | Second lens | Aspheric surface | -161.7351 | 0.5000 | 1.66 | 20.40 |
| S4 | | Aspheric surface | 7.8257 | 0.3588 | | |
| S5 | Third lens | Aspheric surface | 22.5835 | 1.4920 | 1.55 | 55.91 |
| S6 | | Aspheric surface | -13.4514 | 0.1096 | | |
| S7 | Fourth lens | Aspheric surface | -9.3215 | 0.6714 | 1.55 | 55.91 |
| S8 | | Aspheric surface | -9.2944 | 1.1344/4.2844 | | |
| S9 | Fifth lens | Aspheric surface | -16.4782 | 0.5000 | 1.66 | 20.40 |
| S10 | | Aspheric surface | 5.0507 | 0.5360 | | |
| S11 | Sixth lens | Aspheric surface | 4.3494 | 0.5654 | 1.55 | 55.91 |
| S12 | | Aspheric surface | 6.0305 | 5.1655/2.0156 | | |
| S13 | Seventh lens | Aspheric surface | -10.9195 | 0.3722 | 1.55 | 55.91 |
| S14 | | Aspheric surface | -19.7859 | 0.2289 | | |
| S15 | Light filter | Spherical surface | Infinite | 0.2100 | 1.52 | 64.20 |
| S16 | | Spherical surface | Infinite | 0.2611 | | |
| S17 | Imaging plane | Flat surface | | | | |

1.1344/4.2844 in Table 3a means that when an object distance is infinite, a spacing between the first lens group G1 and the second lens group G2 on the optical axis is 1.1344 mm, and when an object distance is 50 mm, a spacing between the first lens group G1 and the second lens group G2 on the optical axis is 4.2844 mm. 5.1655/2.0156 means that when the object distance is infinite, a spacing between the second lens group G2 and the third lens group G3 on the optical axis is 5.1655 mm, and when the object distance is 50 mm, the spacing between the first lens group G1 and the second lens group G2 on the optical axis is 2.0156 mm.

Table 3b is an aspheric coefficient of each lens of the optical lens 10 in Embodiment 3.

**Table 3b**

| Surface number | K | A4 | A6 | A8 | A10 |
|---|---|---|---|---|---|
| S1 | 0.0000E+00 | 7.0944E-06 | -6.0239E-06 | 1.2982E-06 | -1.9383E-07 |
| S2 | 0.0000E+00 | 3.4013E-03 | -1.8376E-04 | 2.1497E-06 | 1.0878E-07 |
| S3 | 0.0000E+00 | -1.1301E-04 | 3.7221E-05 | -2.3179E-06 | 1.1876E-07 |
| S4 | 0.0000E+00 | -4.2859E-04 | -5.2601E-04 | 9.2190E-05 | -3.8179E-06 |
| S5 | 0.0000E+00 | 7.0549E-03 | -1.4572E-03 | 0.00014925 | -6.1197E-06 |
| S6 | 0.0000E+00 | 3.6912E-03 | -9.1145E-04 | 1.6884E-04 | -1.4977E-05 |
| S7 | 0.0000E+00 | 2.8979E-03 | 8.5847E-04 | -5.1708E-05 | 4.2378E-06 |
| S8 | 0.0000E+00 | 0.003539544 | 9.4004E-04 | -7.8550E-05 | 2.9170E-06 |
| S9 | 0.0000E+00 | 8.8676E-03 | -4.3769E-04 | 1.2181E-05 | 1.0690E-06 |
| S10 | 0.0000E+00 | -4.4965E-03 | 2.3687E-03 | -2.4182E-04 | 1.8952E-05 |
| S11 | 0.0000E+00 | -2.0786E-02 | 6.2214E-04 | 2.3809E-04 | -3.0931E-05 |
| S12 | 0.0000E+00 | -1.1616E-02 | -4.2156E-04 | 3.3554E-04 | -3.9426E-05 |
| S13 | 0.0000E+00 | -5.4378E-03 | 2.2748E-04 | 2.0021E-05 | -2.228 1E-06 |
| S14 | 0.0000E+00 | -1.0866E-02 | 8.6508E-04 | -5.2454E-05 | 1.1982E-08 |
| Surface number | A12 | A14 | A16 | A18 | A20 |
| S1 | | | | | |
| S2 | | | | | |
| S3 | | | | | |
| S4 | | | | | |
| S5 | 9.0013E-08 | | | | |
| S6 | 4.8915E-07 | | | | |
| S7 | -1.0784E-07 | | | | |
| S8 | 7.1231E-07 | | | | |
| S9 | -2.6056E-07 | | | | |
| S10 | -1.1086E-06 | | | | |
| S11 | 2.0718E-06 | | | | |
| S12 | 2.2510E-06 | | | | |
| S13 | -6.0489E-08 | 4.2694E-09 | 5.3785E-10 | 3.3439E-11 | -2.0124E-12 |
| S14 | 8.7175E-08 | 5.5610E-09 | -5.9108E-10 | -3.9195E-11 | 5.6321E-12 |

In this embodiment, all the object side surfaces and the image side surfaces of the first lens L1 to the seventh lens L7 are aspheric surfaces, and may be limited by using but not limited to the following aspheric surface formula:

$$z = \frac{cr^2}{1 + \sqrt{1 - (1+k)\,c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between a point on an aspheric curve and the optical axis; c is a curvature; k is a cone coefficient; and $\alpha_i$ is an $i^{th}$-order aspheric coefficient.

Table 3c is a basic parameter of the optical lens 10 in Embodiment 3. In Table 3c, f1 to f7 are focal lengths of the first lens L1 to the seventh lens L7, F1 to F3 are focal lengths of the first lens group G1 to the third lens group G3, ImgH is a maximum image height of the optical lens 10, the maximum image height is half of a diagonal size of a photosensitive element, and Fno is an f-number.

**Table 3c**

| Parameter | ImgH | EFL | f1 | f2 | f3 | f4 | f5 | f6 | f7 |
|---|---|---|---|---|---|---|---|---|---|
| Value (mm) | 3.6 | 14.55 | 6.98 | -11.18 | 15.65 | 439.35 | -7.01 | 20.62 | -45.24 |
| Parameter | Fno | F1 | F2 | F3 | ox 1 + ox2 + ox3 | TTL | F1/EFL | F2/EFL | Nearest object distance |
| Value (mm) | 1.6 | 8.59 | -10. 5 | -45.24 | 7.1 | 14.1 | 0.5904 | -0.7216 | 50 |

In this embodiment, when the optical lens 10 is switched from a long shot to a close-up shot, for example, switched to focus at a macro distance of 50 mm, a spacing between the first lens group G1 and the second lens group G2 is increased from 1.1344 mm to 4.2844 mm, a focusing stroke of the second lens group G2 is 3.15 mm, the focusing stroke is short, and a focusing effect is good, so that a good macro image shooting effect can be implemented. In this embodiment, the second lens group G2 is moved toward the image side to implement macro focusing image shooting, and the first lens group G1 does not move. In this way, macro image shooting can be implemented without increasing a size of the optical lens 10.

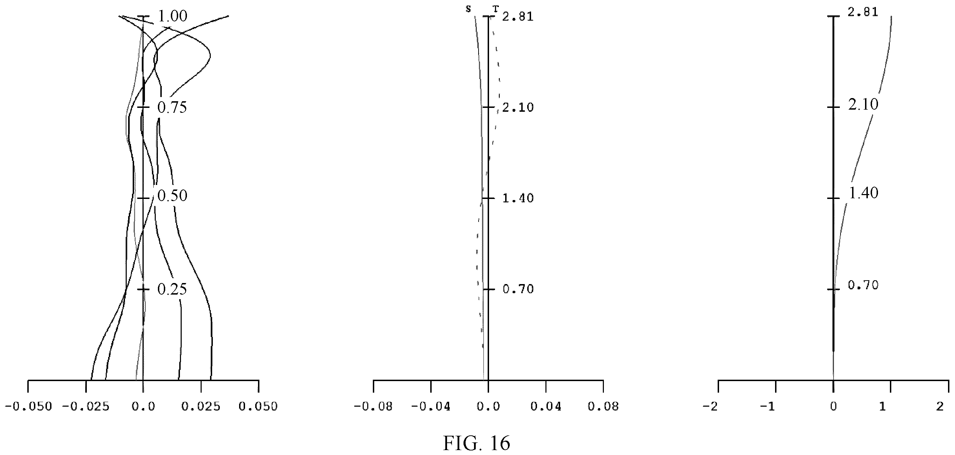

FIG. 16 is a representation diagram of optical performance of an optical lens 10 according to Embodiment 3 when an object distance is infinite.

FIG. 16 includes axial chromatic aberration curve diagram, an astigmatism curvature of field diagram, and a distortion diagram of the optical lens 10 when the object distance is infinite. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. The values shown in FIG. 16 are all small, and axial aberration (spherical aberration, chromatic aberration, or the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. As shown in FIG. 16, field curvatures are small in both directions, and the system has a good focal depth. The distortion diagram is used to represent relative deviations of beam convergence points (actual image heights) from an ideal image height in different fields of view. FIG. 16 shows that the distortions are all within 2%. This may ensure that there is no clear deformation.

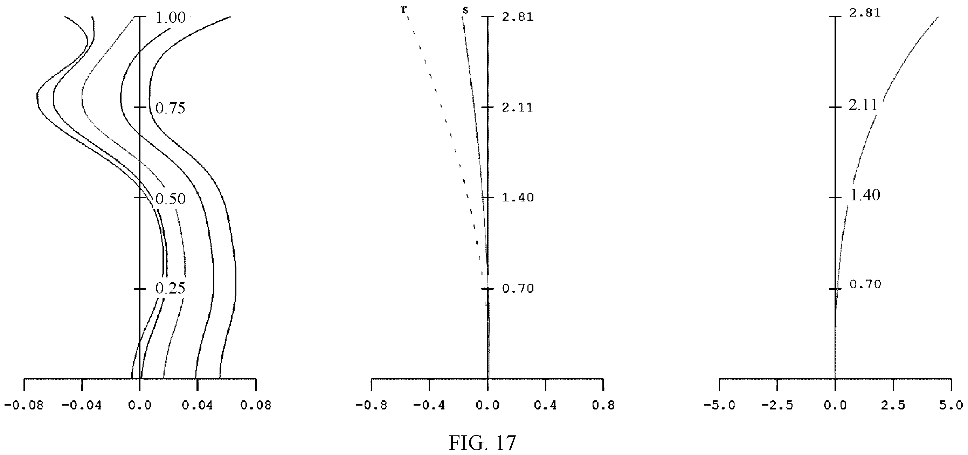

FIG. 17 is a representation diagram of optical performance of an optical lens 10 according to Embodiment 3 when an object distance is 50 mm.

FIG. 17 includes axial chromatic aberration curve diagram, an astigmatism curvature of field diagram, and a distortion diagram of the optical lens 10 when the object distance is 50 mm. The axial chromatic aberration curve diagram includes spherical aberration curves corresponding to different bands (including 650 nm, 610 nm, 555 nm, 510 nm, and 470 nm in the figure) of a system. Values shown in FIG. 17 are all small, and axial aberration (spherical aberration, chromatic aberration, and the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. When a field of view value is excessively large, image quality of the field of view is poor or a high-level aberration exists. As shown in FIG. 17, field curves in both directions are small, and the system has a good focal depth. The distortion diagram is used to represent a relative deviation between a convergence point (actual image height) of a light beam in different fields of view and an ideal image height. FIG. 17 shows that the distortions are all within 5%. This may ensure that there is no clear deformation.

It can be learned from FIG. 16 and FIG. 17 that the optical lens 10 provided in Embodiment 3 can implement good imaging quality when the object distance is infinite and the object distance is a macro distance of 50 mm.

**Embodiment 4**

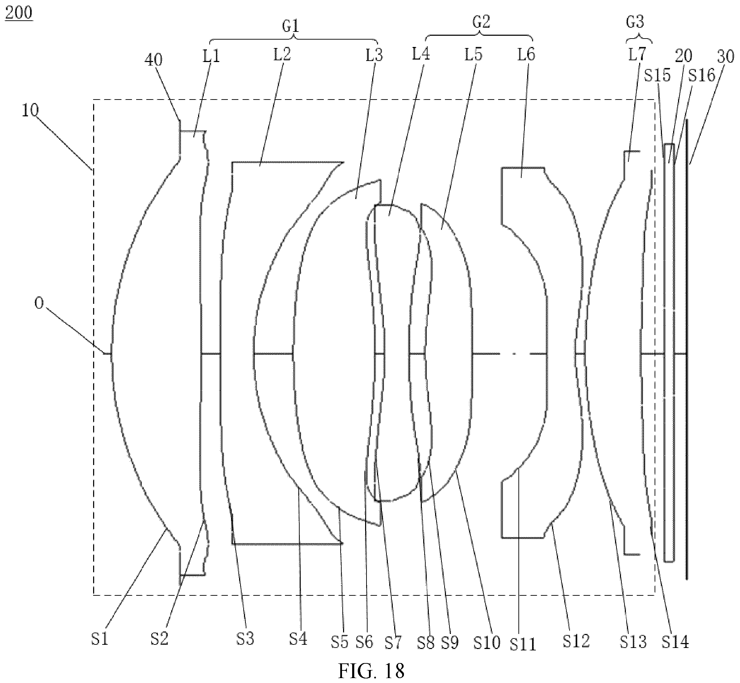

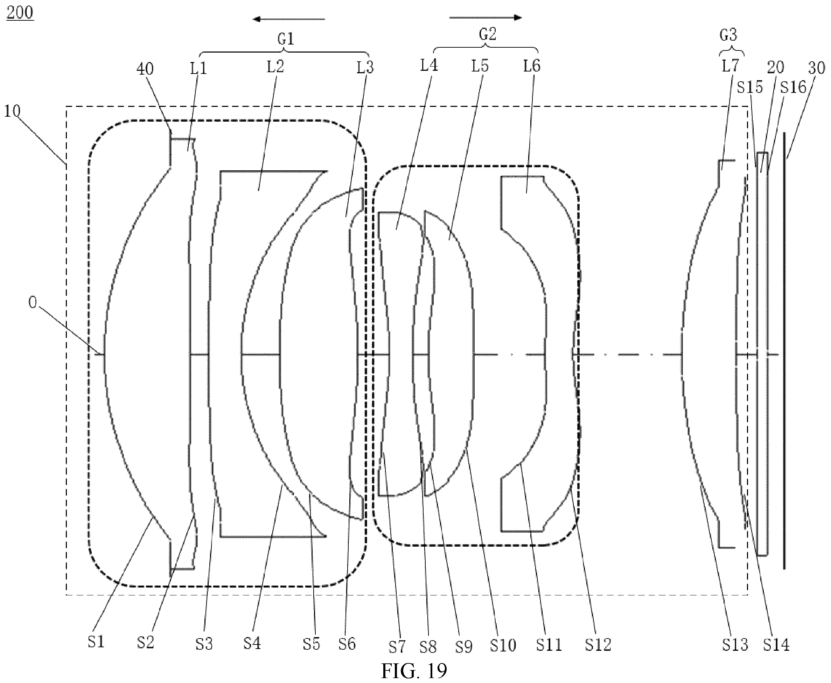

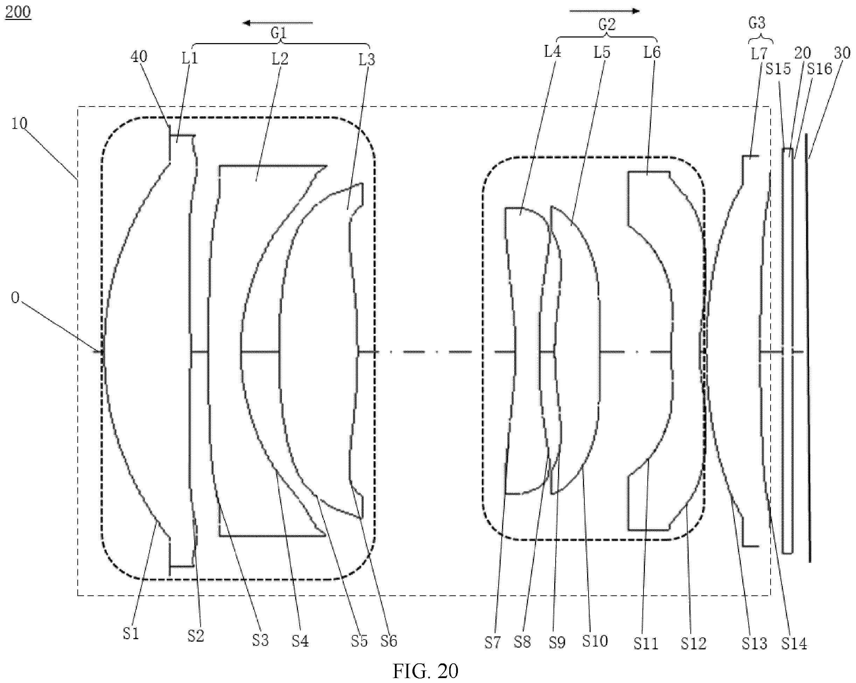

FIG. 18 is a diagram of a structure of a camera module 200 according to Embodiment 4 of this application. FIG. 19 is a diagram of a structure of the camera module 200 shown in FIG. 18 in a working state. FIG. 20 is a diagram of a structure of the camera module 200 shown in FIG. 18 in another working state. The camera module 200 shown in FIG. 18 is in a non-working state. FIG. 19 is a long-shot working state of the camera module 200 shown in FIG. 18 when an object distance is infinite. FIG. 20 is a close-up working state of the camera module 200 shown in FIG. 18 when the camera module 200 performs macro image shooting.

The camera module 200 includes an optical lens 10, a light filter 20, and a photosensitive element 30. In this embodiment, the optical lens 10 includes an aperture 40, a first lens group G1, a second lens group G2, and a third lens group G3 that are sequentially disposed from an object side to an image side. The first lens group G1 has positive focal power, the first lens group G1 includes a first lens L1, a second lens L2, and a third lens L3, the second lens group G2 has negative focal power, the second lens group G2 includes a fourth lens L4, a fifth lens L5 and a sixth lens L6, the third lens group G3 has positive focal power, the third lens group G3 includes a seventh lens L7, and the first lens L1 to the seventh lens L7 are sequentially arranged from the object side to the image side. The aperture 40 is a variable aperture, and a size of the aperture may be adjusted based on a requirement. The aperture 40 is located on an object side surface of the first lens L1. In another implementation, the aperture 40 may alternatively be located at another position. This is not limited in this application.

In this embodiment, the first lens L1 has positive focal power, the first lens L1 includes an object-side surface S1 and an image-side surface S2, the second lens L2 has negative focal power, the second lens L2 includes an object-side surface S3 and an image-side surface S4, the third lens L3 has positive focal power, the third lens L3 includes an object-side surface S5 and an image-side surface S6, the fourth lens L4 has negative focal power, the fourth lens L4 includes an object-side surface S7 and an image-side surface S8, the fifth lens L5 has positive focal power, the fifth lens L5 includes an object-side surface S9 and an image-side surface S10, the sixth lens L6 has negative focal power, the sixth lens L6 includes an object-side surface S11 and an image-side surface S12, the seventh lens L7 has positive focal power, and the seventh lens L7 includes an object-side surface S13 and an image-side surface S14. In addition, the light filter is disposed after the seventh lens L7, and includes an object-side surface S15 and an image-side surface S16. An imaging plane S17 (not shown in FIG. 18, FIG. 19, and FIG. 20) is located on image sides of all lenses in the optical lens 10, and the imaging plane S17 is a carrier plane on which an image is formed after light sequentially passes through the lenses in the optical lens 10. In this embodiment, the first lens L1 is made of glass, and the second lens L2 to the seventh lens L7 are made of plastic.

It should be noted that a partial region of the seventh lens L7 in FIG. 18, FIG. 19, and FIG. 20 is an opening region. This is because the opening region is an ineffective region, and the ineffective region does not affect an optical path. During production, a worker may manufacture a closed lens according to a mold molding condition.

In this embodiment, when the camera module 200 is switched from a non-working state (a folded state) to a working state (a long-shot state or a close-up state), the first lens group G1 and the second lens group G2 move toward the object side along the optical axis O, and the third lens group G3 does not move. When the camera module 200 is switched from the working state to the non-working state, the first lens group G1 and the second lens group G2 move toward the image side along the optical axis O, and the third lens group G3 does not move. In this way, an overall size of the camera module 200 is low, and a corresponding part of an electronic device 1000 does not protrude.

In this embodiment, when the camera module 200 is switched from the long-shot state to the close-up state, the first lens group G1 moves toward the object side along the optical axis O, the second lens group G2 moves toward the image side along the optical axis O, and the third lens group G3 does not move, to implement focusing.

In this embodiment, when the camera module 200 is switched from the close-up state to the long-shot state, the first lens group G1 moves toward the image side along the optical axis O, the second lens group G2 moves toward the object side along the optical axis O, and the third lens group G3 does not move, to implement focusing.

Table 4a shows a curvature radius, a thickness, a refractive index (Nd), and an Abbe number of each lens and the light filter 20 of the optical lens 10 in Embodiment 4 when the optical lens 10 is in a long-shot working state and a close-up working state. The thickness includes a thickness of a lens and a spacing between lenses, and the Abbe number is a dispersion coefficient.

**Table 4a**

| Surface number | Description | Surface type | Curvature radius (mm) | Thickness (mm) | Refractive index | Abbe number |
|---|---|---|---|---|---|---|
| Object plane | | Flat surface | Infinite | Infinite/50 | | |
| S1 | First lens | Aspheric surface | 5.9002 | 1.8273 | 1.81 | 40.99 |
| S2 | | Aspheric surface | -49.1989 | 0.3799 | | |
| S3 | Second lens | Aspheric surface | 40.5979 | 0.6867 | 1.66 | 20.40 |

(continued)

| Surface number | Description | Surface type | Curvature radius (mm) | Thickness (mm) | Refractive index | Abbe number |
|---|---|---|---|---|---|---|
| Object plane | | Flat surface | Infinite | Infinite/50 | | |
| S4 | | Aspheric surface | 4.3383 | 0.8105 | | |
| S5 | Third lens | Aspheric surface | 11.5861 | 1.6616 | 1.55 | 55.91 |
| S6 | | Aspheric surface | -11.0414 | 0.6696/3.3476 | | |
| S7 | Fourth lens | Aspheric surface | -5.4183 | 0.5000 | 1.66 | 20.40 |
| S8 | | Aspheric surface | 18.2156 | 0.3236 | | |
| S9 | Fifth lens | Aspheric surface | 5.2949 | 0.9473 | 1.66 | 20.40 |
| S10 | | Aspheric surface | 47.2989 | 1.5272 | | |
| S11 | Sixth lens | Aspheric surface | 8.6417 | 0.5896 | 1.55 | 55.91 |
| S12 | | Aspheric surface | 3.5333 | 2.3019/0.1443 | | |
| S13 | Seventh lens | Aspheric surface | 8.5777 | 1.1359 | 1.55 | 55.91 |
| S14 | | Aspheric surface | 17.1239 | 0.4684 | | |
| S15 | Light filter | Spherical surface | Infinite | 0.2100 | 1.52 | 64.20 |
| S16 | | Spherical surface | Infinite | 0.2611 | | |
| S17 | Imaging plane | Flat surface | | | | |

0.6696/3.3476 in Table 4a means that when an object distance is infinite, a spacing between the first lens group G1 and the second lens group G2 on the optical axis is 0.6696 mm, and when the object distance is 50 mm, the spacing between the first lens group G1 and the second lens group G2 on the optical axis is 3.3476 mm. 2.3019/0.1443 means that when the object distance is infinite, a spacing between the second lens group G2 and the third lens group G3 on the optical axis is 2.3019 mm, and when the object distance is 50 mm, the spacing between the first lens group G1 and the second lens group G2 on the optical axis is 0.1443 mm.

Table 4b is an aspheric coefficient of each lens of the optical lens 10 in Embodiment 4.

**Table 4b**

| Surface number | K | A4 | A6 | A8 | A10 |
|---|---|---|---|---|---|
| S1 | -8.7262E-02 | -3.1309E-04 | -5.1554E-05 | 6.4741E-06 | 5.4081E-07 |
| S2 | -2.0000E+01 | 2.0710E-04 | 5.9407E-05 | 4.8062E-05 | -1.1722E-05 |
| S3 | 1.3325E+01 | -2.8506E-03 | 1.2990E-03 | -2.6404E-04 | 3.6102E-05 |
| S4 | -2.9387E-01 | -2.9083E-03 | 1.7993E-03 | -6.8411E-04 | 1.3443E-04 |
| S5 | -5.0170E+00 | 1.7687E-03 | 5.7093E-04 | -0.000255753 | 5.0020E-05 |
| S6 | 9.9112E+00 | 2.5869E-03 | 8.8065E-05 | 3.2917E-05 | -1.6308E-05 |
| S7 | 4.5642E-01 | 2.9105E-02 | -8.1838E-03 | 1.9687E-03 | -3.4738E-04 |
| S8 | 2.0000E+01 | 0.011764492 | -1.9448E-03 | -5.8670E-04 | 3.2263E-04 |
| S9 | 2.4210E-01 | -2.4118E-02 | 5.7007E-03 | -2.1600E-03 | 4.6951E-04 |
| S10 | 1.0711E+00 | -1.7676E-02 | 3.2887E-03 | -1.1212E-03 | 2.4883E-04 |
| S11 | -3.2257E+00 | -5.4549E-02 | 7.2249E-03 | -1.6018E-04 | -2.2980E-04 |
| S12 | -2.8216E+00 | -4.8085E-02 | 1.1015E-02 | -1.8789E-03 | 2.2668E-04 |
| S13 | 1.0368E+00 | -4.1162E-03 | 1.5168E-03 | -3.5079E-04 | 5.3758E-05 |
| S14 | 2.0000E+01 | -1.3216E-02 | 4.6014E-03 | -1.0637E-03 | 1.6023E-04 |

(continued)

| Surface number | A12 | A14 | A16 | A18 | A20 |
|---|---|---|---|---|---|
| S1 | -1.7201E-07 | 1.4314E-08 | -4.0414E-10 | | |
| S2 | 1.2828E-06 | -6.6517E-08 | 1.2727E-09 | | |
| S3 | -2.7970E-06 | 1.0600E-07 | -1.5191E-09 | | |
| S4 | -1.2715E-05 | 5.3836E-07 | -7.8926E-09 | | |
| S5 | -3.1267E-06 | -4.8936E-10 | 5.0388E-09 | | |
| S6 | 5.2084E-06 | -6.3863E-07 | 3.2149E-08 | | |
| S7 | 4.1147E-05 | -2.9328E-06 | 9.4253E-08 | | |
| S8 | -6.9463E-05 | 7.2626E-06 | -3.0915E-07 | | |
| S9 | -5.7847E-05 | 1.9666E-06 | 3.6173E-07 | -3.24932E-08 | |
| S10 | -3.5521E-05 | 3.0442E-06 | -1.1780E-07 | | |
| S11 | 5.8603E-05 | -6.2470E-06 | 2.2676E-07 | | |
| S12 | -1.7466E-05 | 7.1518E-07 | -1.1168E-08 | | |
| S13 | -5.0247E-06 | 2.5975E-07 | -5.6843E-09 | | |
| S14 | -1.4730E-05 | 7.4467E-07 | -1.5935E-08 | | |

In this embodiment, all the object side surfaces and the image side surfaces of the first lens L1 to the seventh lens L7 are aspheric surfaces, and may be limited by using but not limited to the following aspheric surface formula:

$$z = \frac{cr^2}{1 + \sqrt{1 - (1+k)\,c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between a point on an aspheric curve and the optical axis; c is a curvature; k is a cone coefficient; and $\alpha_i$ is an $i^{th}$-order aspheric coefficient.

Table 4c is a basic parameter of the optical lens 10 in Embodiment 4. In Table 4c, f1 to f7 are focal lengths of the first lens L1 to the seventh lens L7, F 1 to F3 are focal lengths of the first lens group G1 to the third lens group G3, ImgH is a maximum image height of the optical lens 10, the maximum image height is half of a diagonal size of a photosensitive element, Fno is an f-number, and a shortest object distance in this embodiment is 50 mm.

**Table 4c**

| Parameter | ImgH | EFL | f1 | f2 | f3 | f4 | f5 | f6 | f7 |
|---|---|---|---|---|---|---|---|---|---|
| Value (mm) | 3.6 | 13.9 | 6.57 | -7.34 | 10.61 | -6.23 | 8.87 | -11.4 | 30.02 |
| Parameter | Fno | F1 | F2 | F3 | ox 1 + ox2 + ox3 | TTL (Far focus) | TTL (Near focus) | F1/EFL | F2/EFL |
| Value (mm) | 1.6 | 8.71 | -6.98 | 30.02 | 10.4 | 14.3 | 14.8 | 0.6266 | -0.5022 |

In this embodiment, when the optical lens 10 is switched from a long shot to a close-up shot, for example, switched to focus at a macro distance of 50 mm, the spacing between the first lens group G1 and the second lens group G2 is decreased from 2.3019 mm to 0.1443 mm, a focusing stroke of the second lens group G2 is 2.1576 mm, the focusing stroke is short, and a focusing effect is good, so that a good macro image shooting effect can be implemented. In this embodiment, when the optical lens 10 is switched from a long shot to a close-up shot, both the first lens group G1 and the second lens group G2 move. In this way, more degrees of freedom are increased, and an image plane drift caused by an object plane change during macro focusing is compensated, and a macro focusing effect is better.

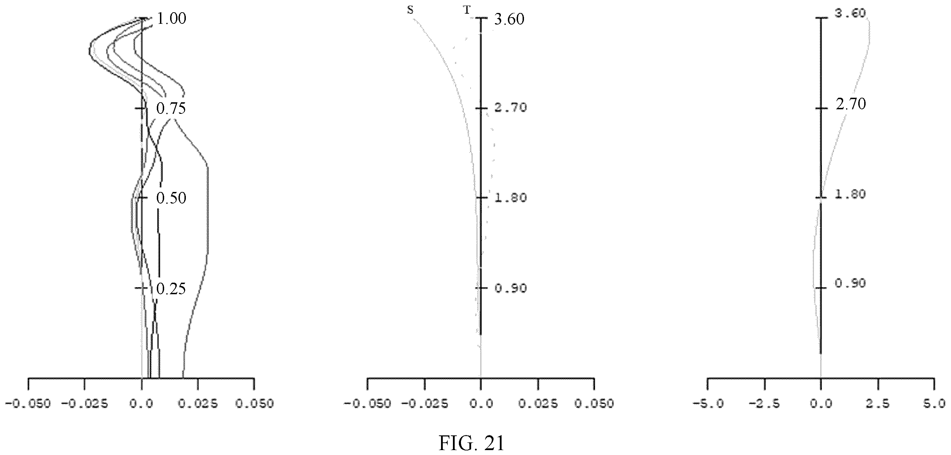

FIG. 21 is a representation diagram of optical performance of an optical lens 10 according to Embodiment 4 when an object distance is infinite.

FIG. 21 includes an axial chromatic aberration curve diagram, an astigmatism curvature of field diagram, and a distortion diagram of the optical lens 10 when the object distance is infinite. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. The values shown in FIG. 21 are all small, and axial aberration (spherical aberration, chromatic aberration, or the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. As shown in FIG. 21, field curvatures are small in both directions, and the system has a good focal depth. The distortion diagram is used to represent relative deviations of beam convergence points (actual image heights) from an ideal image height in different fields of view. FIG. 21 shows that the distortions are all within 3%. This may ensure that there is no clear deformation.

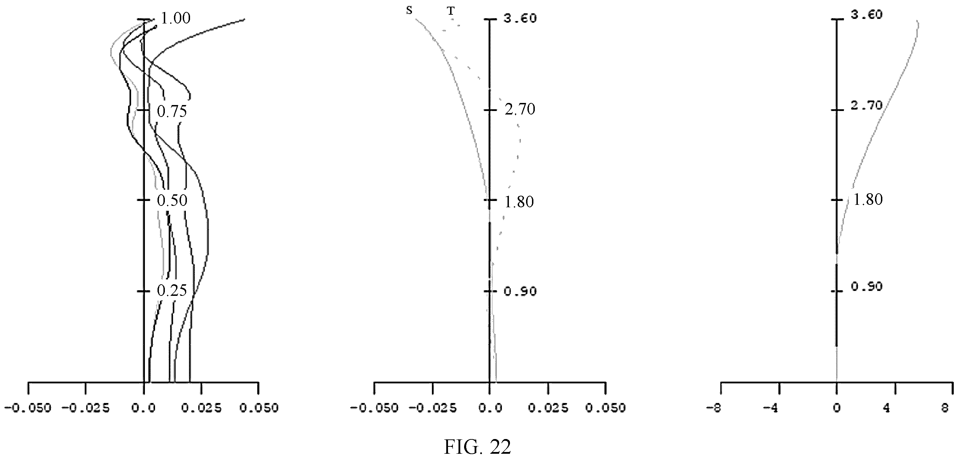

FIG. 22 is a representation diagram of optical performance of an optical lens 10 according to Embodiment 4 when an object distance is 50 mm.

FIG. 22 includes axial chromatic aberration curve diagram, an astigmatism curvature of field diagram, and a distortion diagram of the optical lens 10 when the object distance is 50 mm. The axial chromatic aberration curve diagram includes spherical aberration curves corresponding to different bands (including 650 nm, 610 nm, 555 nm, 510 nm, and 470 nm in the figure) of a system. Values shown in FIG. 22 are all small, and axial aberration (spherical aberration, chromatic aberration, and the like) of the optical lens 10 is well corrected. The astigmatic curvature of field diagram is used to show deviations between convergence points of pencils in different fields of view and an ideal imaging plane. A solid line S is a beam in a sagittal direction, and a dashed line T is a beam in a meridian direction. When a field of view value is excessively large, image quality of the field of view is poor or a high-level aberration exists. As shown in FIG. 22, field curves in both directions are small, and the system has a good focal depth. The distortion diagram is used to represent a relative deviation between a convergence point (actual image height) of a light beam in different fields of view and an ideal image height. FIG. 22 shows that the distortions are all within 8%. This may ensure that there is no clear deformation.

It can be learned from FIG. 21 and FIG. 22 that the optical lens 10 provided in Embodiment 4 can implement good imaging quality when the object distance is infinite and the object distance is a macro distance of 50 mm.

In another implementation, when the camera module 200 is switched from the long-shot state to the close-up state, the third lens group G3 may alternatively move toward the object side or the image side.

In another implementation, when the camera module 200 is switched from the close-up state to the long-shot state, the third lens group G3 may alternatively move toward the object side or the image side.

In a focusing process in which the optical lens 10 switches from a long shot to a close-up shot, the second lens group G2 may move toward the image side, or the first lens group G1 moves toward the object side, or the first lens group G1 moves toward the object side, and the second lens group G2 may move toward the image side, to increase a spacing between the first lens group G1 and the second lens group G2, to implement a macro focusing effect. The optical lens 10 in this application is featured in telephoto, a large image height, macro, and a large clear aperture, and can be miniaturized.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application. In a case that no conflict occurs, embodiments of this application and the features in the embodiments may be mutually combined.

**Claims**

1. An optical lens, comprising a first lens group and a second lens group that are arranged from an object side to an image side, wherein the first lens group has positive focal power, the second lens group has negative focal power, and the first lens group and/or the second lens group are/is focusing lens groups/a focusing lens group; and in a focusing process in which the optical lens switches from a long shot to a close-up shot, a spacing between the first lens group and the second lens group increases, an effective focal length of the optical lens decreases, and the optical lens satisfies the following relational expression:

$$F2/EFL > -5,$$

wherein
F2 is a focal length of the second lens group, and EFL is the effective focal length of the optical lens.

2. The optical lens according to claim 1, wherein in the focusing process in which the optical lens switches from the long shot to the close-up shot, the first lens group moves toward the object side along an optical axis and/or the second lens group moves toward the image side along the optical axis.

3. The optical lens according to claim 1 or 2, wherein the optical lens satisfies the following relational expression:

$$0.5 \le TTL/EFL \le 5,$$

wherein
TTL is a distance from an object-side surface of a first lens in the first lens group to an imaging plane on the optical axis when the optical lens is in a working state.

4. The optical lens according to any one of claims 1 to 3, wherein the optical lens satisfies the following relational expression:

$$F1/EFL \le 5,$$

wherein
F1 is a focal length of the first lens group.

5. The optical lens according to any one of claims 1 to 4, wherein the first lens group comprises at least two lenses, and the at least two lenses have different Abbe numbers.

6. The optical lens according to any one of claims 1 to 5, wherein the first lens group comprises the first lens, a second lens, and a third lens that are arranged from the object side to the image side, the first lens has positive focal power, the second lens has negative focal power, and the third lens has positive focal power.

7. The optical lens according to any one of claims 1 to 6, wherein the first lens group comprises the first lens, and the optical lens satisfies the following relational expression:

$$Vd1 \ge 18,$$

wherein
Vd1 is an Abbe number of the first lens.

8. The optical lens according to any one of claims 1 to 7, wherein at least one lens in the first lens group is made of glass.

9. The optical lens according to any one of claims 1 to 8, wherein the first lens group comprises the first lens, and a near-optical-axis region on the object-side surface of the first lens has a convex surface.

10. The optical lens according to any one of claims 1 to 9, wherein the optical lens satisfies the following relational expression:

$$1 \text{ mm} \le \varphi1 \le 30 \text{ mm},$$

wherein
$\phi1$ is a diameter of a maximum effective region of the first lens group.

11. The optical lens according to any one of claims 1 to 10, wherein the optical lens satisfies the following relational expression:

$$1 \text{ mm} \leq \varphi 2 \leq 30 \text{ mm},$$

wherein
$\phi 2$ is a diameter of a maximum effective region of the second lens group.

12. The optical lens according to any one of claims 1 to 11, wherein the optical lens satisfies the following relational expression:

$$0.3 \text{ mm} \leq h1 \leq 50 \text{ mm},$$

wherein
h1 is a maximum pop-up height of the first lens group.

13. The optical lens according to any one of claims 1 to 12, wherein the optical lens satisfies the following relational expression:

$$0.3 \text{ mm} \leq h2 \leq 50 \text{ mm},$$

wherein
h2 is a maximum pop-up height of the second lens group.

14. The optical lens according to any one of claims 1 to 13, wherein the optical lens comprises a variable aperture, and a size of the variable aperture decreases in the focusing process in which the optical lens switches from the long shot to the close-up shot.

15. The optical lens according to any one of claims 1 to 14, wherein the optical lens satisfies the following relational expression:

$$0.5 \leq Fno \leq 8,$$

wherein
Fno is an f-number of the optical lens.

16. The optical lens according to any one of claims 1 to 15, wherein the optical lens comprises a third lens group, the third lens group is located on an image side of the second lens group, and the third lens group has optical power.

17. The optical lens according to claim 16, wherein the optical lens satisfies the following relational expression:

$$5 \text{ mm} \leq ox1 + ox2 + ox3 \leq 30 \text{ mm},$$

wherein
ox1 is a thickness of the first lens group on the optical axis, ox2 is a thickness of the second lens group on the optical axis, and ox3 is a thickness of the third lens group on the optical axis.

18. The optical lens according to claim 16 or 17, wherein an optical surface of at least one lens in the third lens group is an aspheric surface.

19. The optical lens according to any one of claims 1 to 18, wherein the optical lens comprises a liquid lens and/or a liquid crystal lens, and the liquid lens and/or the liquid crystal lens are/is located in the first lens group.

20. A camera module, comprising a photosensitive element and the optical lens according to any one of claims 1 to 19, wherein the photosensitive element is located on an image side of the optical lens.

21. An electronic device, comprising an image processor and the camera module according to claim 20, wherein the image processor is communicatively connected to the camera module, and the image processor is configured to obtain image data from the camera module and process the image data.

1000

200

100

300

FIG. 1

FIG. 2

FIG. 3

FIG. 4

Non-working
state

Working state

Object distance:
infinite

Working state

Object distance:
macro distance

First lens group

Second lens group

Third lens group

First lens group

Second lens group

Third lens group

First lens group

Second lens group

Third lens group

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

EP 4 474 882 A1

FIG. 19

FIG. 20

FIG. 21

FIG. 22

<table>
<tr><td colspan="2">**INTERNATIONAL SEARCH REPORT**</td><td colspan="2">International application No.<br>**PCT/CN2023/082773**</td></tr>
</table>

**A. CLASSIFICATION OF SUBJECT MATTER**

G02B 13/00(2006.01)i;G02B 13/18(2006.01)i;G02B 13/24(2006.01)i

According to International Patent Classification (IPC) or to both national classification and IPC

**B. FIELDS SEARCHED**

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS; CNTXT; CNKI; VEN; WPABS; USTXT; WOTXT; EPTXT: 摄像, 镜头, 透镜, 移动, 变焦, 变倍, 聚焦, 对焦, 正, 负, imaging, lens, move, zoom, focus, positive, negative

**C. DOCUMENTS CONSIDERED TO BE RELEVANT**

| Category* | Citation of document, with indication, where appropriate, of the relevant passages | Relevant to claim No. |
|---|---|---|
| X | US 4632519 A (NIPPON KOGAKU K. K.) 30 December 1986 (1986-12-30)<br>description, column 3, line 46 to column 15, line 20, and figures 1-6 | 1-21 |
| X | CN 102621667 A (TAMRON CO., LTD.) 01 August 2012 (2012-08-01)<br>description, paragraphs [0010]-[0770], and figures 1-19 | 1-21 |
| X | US 5227920 A (NIKON CORP.) 13 July 1993 (1993-07-13)<br>description, column 1, line 30 to column 15, line 64, and figures 1-12 | 1-21 |
| A | CN 205318000 U (JIANGXI LIANCHUANG ELECTRONICS CO., LTD.) 15 June 2016<br>(2016-06-15)<br>entire document | 1-21 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2023** | **08 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/082773**

| Patent document cited in search report | | | Publication date (day/month/year) | Patent family member(s) | Publication date (day/month/year) |
|---|---|---|---|---|---|
| US | 4632519 | A | 30 December 1986 | None | |
| CN | 102621667 | A | 01 August 2012 | None | |
| US | 5227920 | A | 13 July 1993 | None | |
| CN | 205318000 | U | 15 June 2016 | None | |

Form PCT/ISA/210 (patent family annex) (July 2022)

## EP 4 474 882 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210288243